# EUROPÄISCHE PATENTSCHRIFT

(11) **EP 3 119 549 B1**
(45) Veröffentlichungstag und Bekanntmachung des Hinweises auf die Patenterteilung: **03.07.2024**
(21) Anmeldenummer: 15716437.7
(22) Anmeldetag: 23.03.2015
(51) Int. Cl.: B23D 65/00

(54) **FERTIGUNGSEINRICHTUNG UND FERTIGUNGSVERFAHREN**
MANUFACTURING DEVICE AND MANUFACTURING METHOD
DISPOSITIF ET PROCÉDÉ DE FABRICATION

(30) Priorität: 21.03.2014 NL 2012493; 03.07.2014 DE 202014103058 U
(43) Veröffentlichungstag der Anmeldung: 25.01.2017
(73) Patentinhaber: AMADA WELD TECH GMBH, 82178 Puchheim (DE)
(72) Erfinder: Kundrat, Jörg, 82110 Germering (DE); Geentjens, Koen, 2480 Dessel (BE)
(74) Vertreter: Ernicke, Moritz
(86) Internationale Anmeldenummer: PCT/EP2015/056110
(87) Internationale Veröffentlichungsnummer: WO 2015/140345

(56) Entgegenhaltungen:
- WO-A1-02/16072
- DE-A1- 2 135 628
- DE-A1- 19 752 140
- JP-A- H03 121 717
- US-A- 4 864 896
- US-A- 5 295 417

## Beschreibung

Die Erfindung betrifft eine Fertigungseinrichtung und ein Fertigungsverfahren für Sägeblätter mit den Merkmalen im Oberbegriff des Verfahrens- und Vorrichtungshauptanspruchs.

Eine solche Fertigungseinrichtung für Kreissägeblätter, gemäß dem Oberbegriff des Anspruchs 1, ist aus der US 4,864,896 A bekannt. Das Sägeblatt besteht aus einem Basisblatt und Schneidelementen, die an die Spitzen von Zahnabschnitten am Basisblatt angeschweißt werden.

Dies geschieht mittels einer elektrischen Pressschweißvorrichtung, insbesondere einer elektrischen Widerstandsschweißvorrichtung. Diese ist mit einem schwenkend zustellbaren Schweißkopf ausgerüstet, an dessen Elektrode ein einzelnes Schneidelement aufgenommen, an der Aufnahmestelle angepresst und durch elektrischen Strom mittels Widerstandserwärmung an der Schweißstelle geschweißt wird. Dabei wird das Schneidelement plan an eine radiale Frontseite des Zahnabschnitts angedrückt und in das Zahnmaterial eingepresst. Zahntoleranzen spielen hierbei keine Rolle.

Die DE 21 35 628 A offenbart eine ähnliche Fertigungseinrichtung für schräg aufwärts geführte Bandsägeblätter, wobei an den Zahnspitzen vorbereitete Mulden für die Aufnahme kugelförmiger Schneidelemente vorgesehen sind, die von einer Zuführung dort eingelegt werden. Ein Schweißkopf mit vertikaler Zustellung der Elektrode schweißt das Schneidelement mit Strom und Druck an. Die Fertigungseinrichtung weist ferner eine Sägebandzuführung und eine Schneidelementzuführung auf.

Die US 4,864,896 A1 zeigt eine Fertigungseinrichtung zum Pressschweißen von Schneidelementen an Sägezähnen, wobei die von einem Schweißschuh gehaltenen Schneidelemente mit einer Schwenkbewegung an den Sägezahn zugestellt werden und mit einem manuell verstellbaren Aktuator der Schweißstrom nach einem definierten Schwenkweg abgestellt wird.

Die WO 02/16072 A1 befasst sich mit dem Löten von strob inserts in Schlitze eines Sägeblatts, wobei das Sägeblatt manuell an der Lötvorrichtung positioniert wird.

Die JP H03-121 717 A betrifft das Schleifen und anschließende Microschweißen von Sägezähnen eines Sägebands.

Es ist Aufgabe der vorliegenden Erfindung, eine verbesserte Fertigungstechnik für Sägeblätter, insbesondere Sägebänder aufzuzeigen.

Die Erfindung löst diese Aufgabe mit den Merkmalen im Verfahrens- und Vorrichtungshauptanspruch.

Die beanspruchte Fertigungstechnik, insbesondere die Fertigungseinrichtung und das Fertigungsverfahren, haben verschiedene Vorteile.

Sie betreffen das Fertigen von Sägeblättern, wobei Schneidelemente an Zähne eines Basisblatts gefügt werden. Dies erfolgt bevorzugt durch ein elektrisches Widerstands-Pressschweissen. Alternativ sind andere Fügetechniken möglich, z.B. ein Löten mit elektrischer Widerstandserwärmung des Prozessbereichs unter Pressdruck. Die elektrische Pressschweissvorrichtung kann auch zum Löten eingesetzt werden.

Mittels einer automatischen Justiervorrichtung kann die Relativlage des Basisblatts, insbesondere Basisbands und des Schweißkopfs am Prozessbereich detektiert und exakt eingestellt sowie bedarfsweise nachjustiert werden. Dabei kann das Basisblatt relativ zum Schweißkopf oder der Schweißkopf relativ zum Basisblatt oder beide relativ zueinander in einer oder mehreren Richtungen bewegt werden. Hierdurch werden konstante und optimale Prozessergebnisse, insbesondere Schweißergebnisse erzielt. Etwaige Lageänderungen der Aufnahmestelle können durch die Justierung kompensiert werden, so dass für das Fügen, insbesondere elektrische Widerstandsschweißen oder Löten, definierte und konstante Kontaktbedingungen vor Ort zwischen Aufnahmestelle und Schneidelement bestehen.

Das Schneidelement kann unterschiedlich ausgebildet sein, z.B. dreieckig, kugelig oder zylindrisch. Es kann von der beweglichen Elektrode am Schweißkopf aufgenommen und an die Aufnahmestelle am Basisblatt zugestellt sowie dort zum Fügen in Position gehalten werden. Dabei ist auch eine seitliche Zentrierung möglich. Das Schneidelement kann mittels einer Zuführvorrichtung vereinzelt von einem Vorrat an die Elektrode am Schweißkopf zugeführt und dort an einer Aufnahme formschlüssig und durch Saugen bzw. mit Unterdruck festgehalten werden.

Die Fertigungstechnik kann ferner eine Prüftechnik beinhalten, mit der das Prozess- oder Schweißergebnis kontrolliert und gegebenenfalls protokolliert werden kann. Durch die Prüfung ist eine Qualitätssicherung möglich. Es kann festgestellt werden, ob die Lage des gefügten, insbesondere geschweißten oder gelöteten Schneidelements am Basisblatt innerhalb der vorgegebenen Toleranzen liegt und insbesondere zentrisch ist. Außerdem können die Form und die Abmessungen des Sägebands, insbesondere der Schneidelemente, kontrolliert werden. Dies ist für den späteren Einsatz des Sägebands und insbesondere für dessen Führung an der Sägemaschine, von hoher Bedeutung. Die Prüftechnik, d.h. die Prüfeinrichtung und das Prüfverfahren, haben eine eigenständige erfinderische Bedeutung und lassen sich auch bei konventionellen Fertigungseinrichtungen ohne automatische Justiertechnik einsetzen.

Die Fertigungseinrichtung ist bevorzugt mit einer Nachbehandlungseinrichtung für das Sägeband mit den angeschweißten Schneidelementen ausgerüstet. Die Nachbehandlung kann insbesondere thermischer Natur sein und durch eine Heizeinrichtung erfolgen. Vorzugsweise kommt hierbei eine induktive Heizeinrichtung mit einer Spule zum Einsatz. Durch die mit zeitlicher und örtlicher Distanz vom Fügeprozess erfolgende Nachbehandlung, insbesondere die nachträgliche Erwärmung, kann die Qualität des geschweißten Sägeblatts, insbesondere Sägebands positiv beeinflusst werden. Insbesondere lassen sich Schweißverzüge, unerwünschte Gefügeänderungen oder dgl. beheben. Mittels einer geeigneten sensorischen Temperaturerfassung kann der Nachbehandlungsprozess auch geregelt werden. Die beanspruchte Nachbehandlungstechnik, insbesondere die Nachbehandlungseinrichtung und das Nachbehandlungsverfahren, haben ebenfalls eine eigenständige erfinderische Bedeutung und können in Kombination mit einer konventionellen Fertigungseinrichtung ohne Justiervorrichtung und/oder ohne Prüfeinrichtung für das Füge- bzw. Schweißergebnis eingesetzt werden.

Die elektrische Pressschweißvorrichtung kann ebenfalls gegenüber dem Stand der Technik modifiziert und verbessert sein. Sie kann insbesondere eine Schutzgaseinrichtung beinhalten, die für konstante und reproduzierbare Schweißbedingungen im Prozessbereich sorgt. Die Schutzgastechnik, d.h. die Schutzgaseinrichtung und das Schutzgasverfahren, haben ebenfalls eine eigenständige erfinderische Bedeutung und können auch bei einer konventionellen Fertigungseinrichtung ohne automatische Justiertechnik und/oder Prüftechnik und/oder Nachbehandlungstechnik eingesetzt werden.

Eine Ausgestaltung der Erfindung bezieht sich auf ein Bearbeitungsgerät und auf das Ausführen einer sich wiederholenden Werkstückbearbeitung, eines Werkstücks, das eine Reihe von aufeinander folgenden Segmenten beinhaltet, mit jeweils einer Zieloberfläche, an der die Bearbeitung ausgeführt werden soll. Dazu zählen Verschiebevorrichtungen, die in der Lage und darauf ausgerichtet sind, das Werkstück aufzunehmen und das Werkstück zwischen aufeinander folgenden Bearbeitungen, über einen nominalen Abstand in der ersten Richtung, in eine nominale Position zu versetzen. Dazu zählt auch eine Bearbeitungseinheit mit einem Bearbeitungsorgan, das entlang einer Arbeitslinie, über einen nominalen Näherungsabstand, zu der Zieloberfläche zustellbar ist, um auf der Zieloberfläche die Bearbeitung auszuführen.

Ein derartiges Bearbeitungsgerät wird angepasst, um an dem Werkstück in aufeinander folgenden Segmenten dieselbe Bearbeitung zu wiederholen. Ein Ausführungsbeispiel hierfür ist eine Fertigungseinrichtung bzw. Produktionsmaschine, mit der gehärtete Sägezahnspitzen an ein Sägeblatt geschweißt oder gelötet werden. Das Werkstück umfasst diesbezüglich gewöhnlich ein, aus einem Blatt gestanztes oder sonst wie entnommenes, und eventuell nachbearbeitetes, Sägeblatt mit aufeinanderfolgenden Segmenten, mit jeweils einem Sägezahn daran. Dies wird in der Längsrichtung mittels hierfür angebrachten Verschiebemitteln schrittweise an einem Schweißkopf vorbei geführt, wobei jeweils in jedem Segment eine einzelne Sägezahnspitze auf die Zieloberfläche des Sägezahnes positioniert und angeschweißt wird. Die Zieloberfläche befindet sich dabei normalerweise ca. auf halbem Wege zu einem Sägezahn und kennt häufig einen sicheren Schiefstand hinsichtlich der Längsrichtung des Sägeblattes. Die Stufengröße, des stufenweise durchgeführten Transports des Werkstücks, korrespondiert diesbezüglich mit dem nominalen Teilungsabstand zwischen den aufeinanderfolgenden Sägezähnen.

Hierbei entsteht das Problem, dass durch geradezu unvermeidbare Produktionstoleranzen Abweichungen in Höhe, Breite und Position der einzelnen Sägezähne auftreten können. Dadurch würde auch die Position der Zieloberfläche jedes Mal variieren, wenn ein Sägezahn schrittweise in eine vorher festgelegte genaue Ausgangsposition gebracht wird. Daraus folgt, dass eine Sägezahnspitze nicht oder nicht genau auf der Zieloberfläche befestigt wird, wodurch das Sägeblatt als Ganzes Ausschuss sein kann.

Mit der beanspruchten Fertigungstechnik wird unter anderem ein Bearbeitungsgerät zur Verfügung gestellt, mit dem eine Bearbeitung an aufeinander folgenden Segmenten präziser wiederholt werden kann, ohne die Passiergeschwindigkeit des Werkstückes durch das Bearbeitungsgerät allzu sehr zu vermindern.

Um das beabsichtigte Ziel zu erreichen, ist das Bearbeitungsgerät mit Erkennungsmitteln ausgerüstet, die in der Lage und darauf ausgerichtet sind, eine Abweichung, zumindest in der ersten Richtung der Zieloberfläche hinsichtlich der Arbeitslinie, numerisch festzustellen, wobei Korrekturmittel mit den Verschiebemitteln und mit der Bearbeitungseinheit gekoppelt sind, wobei die Korrekturmittel, zumindest während des Betriebes, die Verschiebemittel ansteuern, um die Abweichung in der ersten Richtung zu beseitigen, und dass die Korrekturmittel, zumindest während des Betriebs, die Bearbeitungseinheit aussteuern, um an dem Bearbeitungsorgan eine, mit der Abweichung in der ersten Richtung, korrespondierende Korrektur des Näherungsabstandes vorzunehmen.

Bei jedem Segment wird eine Abweichung von der Zieloberfläche, hinsichtlich einer Nominalen, d.h. einer bestimmten Position davon, in Form einer Abweichung von der Arbeitslinie des Bearbeitungsorgans, festgesetzt, d.h. hinsichtlich des Trajektes, zu dem das Bearbeitungsorgan jedes Mal an die Zieloberfläche des Werkstückes ausgeschickt wird, um die beabsichtigte Bearbeitung daran auszuführen. Gewöhnlich handelt es sich dabei um eine lineare Arbeitslinie, aber der Begriff Arbeitslinie ist im Rahmen der Erfindung weiter aufzufassen, sodass auch gebogene und sonst wie von einer geraden Linie abweichende Trajekte darunter verstanden werden.

Um die genannte Abweichung hinsichtlich der Arbeitslinie festzustellen, reicht in dieser Variante der Justierung eine Neupositionierung des Werkstücks in der Transportrichtung, in Form einer kleinen Korrektur, die mittels der Verschiebemittel ausgeführt wird, um die Zieloberfläche wieder in die normale Bahn des Bearbeitungsorgans zu bringen. Aus dieser Korrektur kann eine damit korrespondierende Korrektur des Näherungsabstands abgeleitet werden, worüber das Bearbeitungsorgan zur Zieloberfläche geschickt wird. Durch die Anwendung dieser Korrektur an dem Bearbeitungsorgan und damit auch der konformen Berichtigung des Näherungsabstands, wird erreicht, dass das Bearbeitungsorgan, auch hinsichtlich der nominalen Position der korrigierten Position des Werkstücks, präzise an der Stelle auf die Zieloberfläche einwirken wird und die Bearbeitung korrekt ausführen wird. Somit kann durch bloßen Gebrauch von bereits angebrachten Verschiebevorrichtungen des Bearbeitungsorgans und des Werkstücks, schnell und angemessen auf Abweichungen in der Höhenrichtung quer zur Verschieberichtung reagiert werden, ohne dass die Abwicklungsgeschwindigkeit nennenswert darunter leidet.

Eine besondere Ausführungsform des Bearbeitungsgeräts sieht vor, dass das Bearbeitungsorgan ein Aufnahmeorgan beinhaltet, das in der Lage und darauf ausgerichtet ist, ein Teilstück bzw. Schneidelement mindestens vorübergehend aufzunehmen und in eine vorab bestimmte Orientierung auf der Zieloberfläche zu platzieren. Damit kann das besagte Teilstück automatisch aufgenommen, ausgerichtet und auf der Zieloberfläche platziert werden. Die Bearbeitungseinheit ist Bestandteil eines Schweißgerätes ist, insbesondere eines elektrischen Widerstandsschweißgerätes, wobei das Aufnahmeorgan von einer Schweißelektrode des Schweißgerätes ausgeht. Also kann das Teilstück ebenfalls durch Schweißen, worunter im Rahmen der vorliegenden Anfrage ebenfalls Löten zu verstehen ist, an der Zieloberfläche befestigt werden.

In einer weiteren besonderen Ausführungsform des Bearbeitungsgeräts hat die Zieloberfläche eines jeden Segmentes einen Schiefstand hinsichtlich der ersten Richtung, wobei die Arbeitslinie des Bearbeitungsorgans annähernd quer zu diesem Schiefstand ausgerichtet ist, und wobei das Werkstück ein Sägeblatt aus Metall ist und das Teilstück ein Sägezahn ist, der mit der Zieloberfläche verbunden wird. Also ist das Bearbeitungsgerät dafür bestimmt und geeignet, die Bearbeitung an einem Sägeblatt, bei dem jeweils an einem Sägezahn eine gehärtete Sägezahnspitze befestigt wird, um dem Sägeblatt als Ganzes mehr Härte, Langlebigkeit und Robustheit zu verleihen, auszuführen.

An sich können die Erkennungsmittel auf unterschiedliche Weise angebracht werden, sowohl mit Kontakt als auch ohne Kontakt. In einer bevorzugten Ausführungsform des Bearbeitungsgeräts wird jedoch von einer kontaktlosen Erkennung ausgegangen. Dazu ist das Bearbeitungsgerät in der genannten Vorzugsausführungsform dadurch gekennzeichnet, dass die Erkennungsmittel einen Bildsensor beinhalten, insbesondere einen Bildsensor eines elektronischen Kamerasystems, das auf die nominale Position ausgerichtet ist. Die Korrekturgeräte beinhalten außerdem das für eine Analyse des Kamerabildes erforderliche Bildverarbeitungsgerät, um aus einer Bildaufnahme die Zieloberfläche zu erkennen und die Abweichung von der Zieloberfläche hinsichtlich der Arbeitslinie festzustellen.

Um zu vermeiden, dass das Werkstück sich, während seinem Gang durch das Bearbeitungsgerät, beispielsweise aufgrund der darin vorhandenen Spannungen, langsam aber sicher in die Höhenrichtung bewegt, ist eine Verschiebevorrichtung für ein Werkstück vorgesehen, die sich durch Verschiebemittel auszeichnet, die eine erste Klemmvorrichtung und eine zweite Klemmvorrichtung beinhalten, deren Klemmmittel jeweils ansteuerbar sind, um das Werkstück hauptsächlich horizontal und hauptsächlich quer auf eine Verschiebevorrichtung einzuklemmen oder freizugeben, und diese an versetzten Positionen in der Verschieberichtung angebracht sind, und dass die Verschiebevorrichtungen, zumindest während des Betriebes, bei der Versetzung eines Werkstückes, das eine von der ersten und zweiten Klemmvorrichtung ansteuern, um das Werkstück freizugeben, während die Verschiebevorrichtungen das andere von der ersten und zweiten Klemmrichtung ansteuern, um das Werkstück einzuklemmen. Also bieten die Verschiebevorrichtungen dem Werkstück die Freiheit, um bei der Freigabe durch eine der Klemmrichtungen, unter Einfluss der Schwerkraft, in die andere Klemmrichtung abwärts zu drehen und danach bei der anderen Klemmvorrichtung andersherum. Das Ergebnis ist dass das Werkstück immer abwärts zurück gedrängt wird und somit ein vertikales Kriechen eingeschränkt wird.

Außer in der Längsrichtung, d.h. in der Transportrichtung des Werkstücks, kann unter Umständen auch eine Korrektur in Breitenrichtung, d.h. quer zu der Transportrichtung, wünschenswert oder selbstauslösend sein. Hierzu sieht eine weitere besondere Ausführungsform des Bearbeitungsgeräts vor, dass Erkennungsmittel angebracht sind, die in der Lage und darauf ausgerichtet sind, in der zweiten Richtung, hauptsächlich quer zur ersten Richtung, eine Abweichung von der Zieloberfläche hinsichtlich der Arbeitslinie numerisch festzustellen, wobei das Bearbeitungsorgan von einem ersten Manipulator ausgeht, der daran ein Trajekt entlang der Arbeitslinie anbringt, wobei der erste Manipulator von einem zweiten Manipulator ausgeht, der in der Lage und darauf ausgerichtet ist, bei dem ersten Manipulator eine Versetzung in die zweite Richtung anzuwenden, und wobei die Korrekturmittel mit dem zweiten Manipulator gekoppelt sind um, zumindest während des Betriebs, den ersten Manipulator in die zweite Richtung zu versetzen, um die Abweichung in der zweiten Richtung zu beseitigen. Für die Breitenkorrektur wird die Arbeitslinie des Bearbeitungsorgans, durch eine proportionale Aussendung des ersten Manipulators vom Ausgangspunkt des Bearbeitungsorgans, entsprechend angepasst. Für den Rest findet falls erforderlich, die zuvor beschriebene Korrektur der eventuellen Abweichung von der Zieloberfläche hinsichtlich der versetzten Arbeitslinie in der Versetzungsrichtung statt.

Auch für die Breitenkorrektur können Erkennungsmittel unterschiedlicher Art angewendet werden, aber die kontaktlosen Erkennungsmittel haben den Vorzug. Eine weitere bevorzugte Ausführungsform des erfindungsgemäßen Bearbeitungsgerätes ist außerdem dadurch gekennzeichnet, dass die Erkennungsmittel einen ersten und einen zweiten Bildsensor beinhalten, insbesondere einen Bildsensor eines elektronischen Kamerasystems, wobei der erste Bildsensor die Nominalposition in die zweite Richtung aufnimmt und der zweite Bildsensor die Nominalposition in die erste Richtung aufnimmt. Damit wird Anschluss bei den Erkennungsmitteln von derselben Art gesucht, wie sie vorzugsweise auch für die ersten Erkennungsmittel angewendet werden. Bilderkennungsmittel und Bildverarbeitungsmittel, normalerweise in der Form von Software, die für die Erkennung der ersten Abweichung angewendet werden können, können also auch für eine Bestimmung einer eventuellen zweiten Abweichung eingesetzt werden.

Die Erfindung bezieht sich auch auf ein Verfahren für das Ausführen eines sich wiederholenden Bearbeitungsgangs an aufeinanderfolgenden Segmenten eines Werkstücks, insbesondere einem wofür das hier oben beschriebene Bearbeitungsgerät eingesetzt wird, wobei die Segmente in der ersten Richtung hintereinander auf die nominale Position versetzt werden und wobei ein Bearbeitungsorgan entlang einer Arbeitslinie über einen Näherungsabstand zur Zieloberfläche gebracht wird. Ein solches Verfahren sieht vor, dass in der nominalen Position je Segment eine Abweichung in der ersten Richtung der Zielfläche des Segments, hinsichtlich der Arbeitslinie des Bearbeitungsorgans, numerisch bestimmt wird, dass in die erste Richtung eine Versetzung des Werkstücks ausgeführt wird, um die Abweichung in der ersten Richtung zu beseitigen, und dass der Näherungsabstand vor der Versetzung des Werkstücks in die erste Richtung, welche die Abweichung beseitigte, korrigiert wird.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische Ansicht einer Fertigungseinrichtung für Sägebänder,
- Figur 2:: eine Frontansicht der Fertigungseinrichtung von Figur 1 mit geöffneter Schutzeinrichtung,
- Figur 3:: eine perspektivische Ansicht der Fertigungseinrichtung von Figur 1 und 2 ohne Schutzeinrichtung,
- Figur 4:: eine vergrößerte Draufsicht auf die Anordnung von Figur 3,
- Figur 5:: eine vergrößerte Frontansicht gemäß Figur 2,
- Figur 6:: eine vergrößerte perspektivische Detailansicht zu Figur 3,
- Figur 7:: eine vergrößerte frontseitige Detailansicht zu Figur 2 und 5,
- Figur 8:: eine vergrößerte perspektivische Detailansicht des Prozessbereichs an der stationären Elektrode,
- Figur 9:: eine schematische Darstellung eines Basisblatts des Sägeblatts,
- Figur 10:: eine Variante der Fertigungseinrichtung mit einem Bearbeitungsgerät, wo das Sägeblatt von Figur 9 eingeführt ist,
- Figur 11:: eine Draufsicht auf das Bearbeitungsgerät mit dem eingeführten Sägeblatt von Figur 9 und 10 und
- Figur 12-14:: aufeinander folgende Stadien einer Ausführungsform der Verfahrens, das mit dem Bearbeitungsgerät von Figur 10 und 11 ausgeführt wird.

Die Erfindung betrifft eine Fertigungseinrichtung (1) und ein Fertigungsverfahren für Sägeblätter, insbesondere Sägebänder (2).

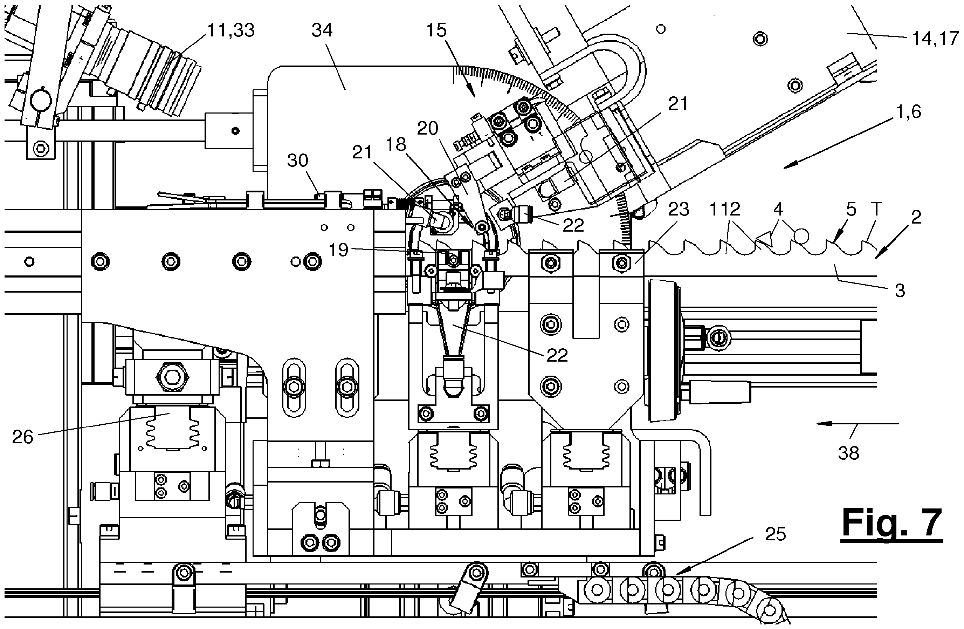

Die Sägebänder (2) bestehen aus einem biegeelastischen, dünnwandigen Basisband (3), an dem mehrere einzelne Schneidelemente (4,115) an jeweils einer vorgegebenen Aufnahmestelle (5) angeschweißt werden. Wie Figur 7 verdeutlicht, hat das Basisband (3) an der Oberseite eine Kontur mit zahnartigen und in Axialrichtung (38) des Sägebands (2) gleichmäßig beabstandeten Vorsprüngen (112). Die Vorsprünge (112) haben an der Oberseite einen angeschrägten Bereich, der auch als Zieloberfläche (T) bezeichnet wird und der die Aufnahmestelle (5) für ein einzelnes Schneidelement (4,115) bildet. Figur 7 und 9 bis 14 verdeutlichen ebenfalls diese Anordnung.

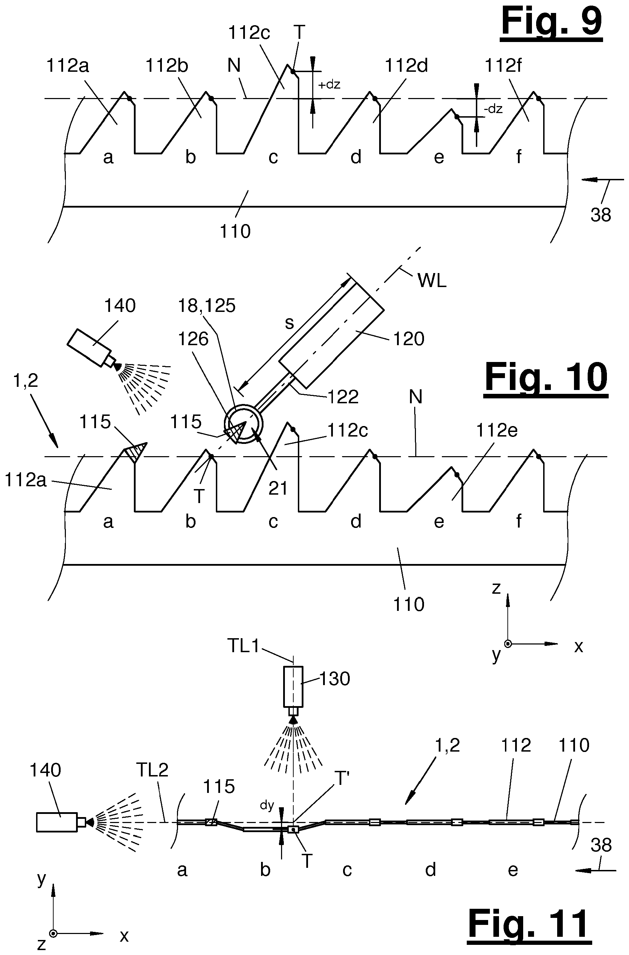

Das Schneidelement (4,115) wird von einem härteren und für den Schneidprozess besser geeigneten Material als das Basisband (3) gebildet. Beide Materialien sind elektrisch leitfähig. Das Basisband (3) besteht z.B. aus Metall, insbesondere Federstahl, und das Schneidelement (4) z.B. aus Hartmetall, einer Wolfram- oder Karbidverbindung oder dgl.. Das Schneidelement (4,115) hat eine für den Schneidprozess und für die Verbindung mit der Aufnahmestelle (5) geeignete Formgebung. Es kann z.B. als Kugel oder als Walze ausgebildet sein, die am Rundungsbereich mit der Aufnahmestelle (5) verschweißt wird. In einer anderen und in Figur 9 bis 14 dargestellten Ausführung kann das Schneidelement (4) eine im Wesentlichen dreieckige Form als Sägezahnspitze (115) mit einer gewölbten Kante für den Kontakt mit der Aufnahmestelle (5) haben. Figur 7 zeigt im rechten Bereich schematisch verschiedene Formgebungen.

Das Verbinden oder sog. Fügen der Schneidelemente (4) mit dem Basisband (3) erfolgt durch ein elektrisches Widerstandsschweißen oder Löten unter Pressdruck. Durch die Formgebung der Aufnahmestelle (5) und des Schneidelements (4) ist der gegenseitige Kontaktbereich verkleinert, was zu einer lokalen Konzentration und Erhöhung des Stromflusses und einer Erwärmung der Kontaktbereiche durch den elektrischen Widerstand führt.

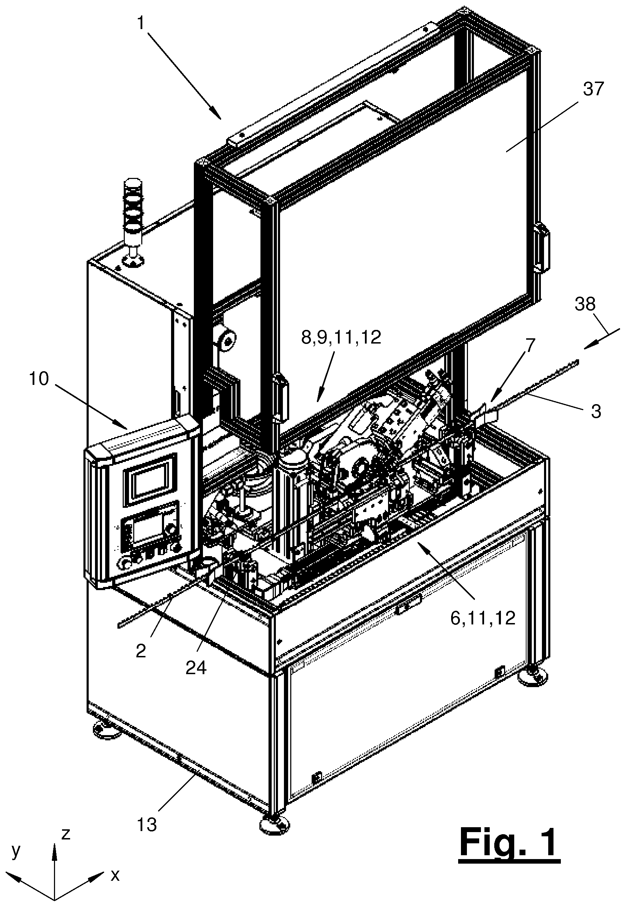

Figur 1 zeigt die Fertigungseinrichtung (1) mit einem Maschinengestell (13), an dem eine Pressschweißvorrichtung (6) und eine Schutzeinrichtung (37) angeordnet sind. Die Schutzeinrichtung (37) umgibt in Betriebsstellung schützend den Prozessbereich an der Pressschweißvorrichtung (6). In Figur 1 ist die Öffnungsstellung dargestellt. Der Pressschweißvorrichtung (6) wird ein Basisband (3) mittels einer Sägebandzuführung (7) in Pfeilrichtung (38) bzw. in der maschinenbezogenen x-Richtung zugeführt, wobei nach Anschweißen der Schneidelemente (4) das bestückte Sägeband (2) an der gegenüberliegenden Seite abgeführt wird. Die Fertigungseinrichtung (1) weist ferner eine Schneidelementzuführung (8) und eine Steuereinrichtung (10) auf.

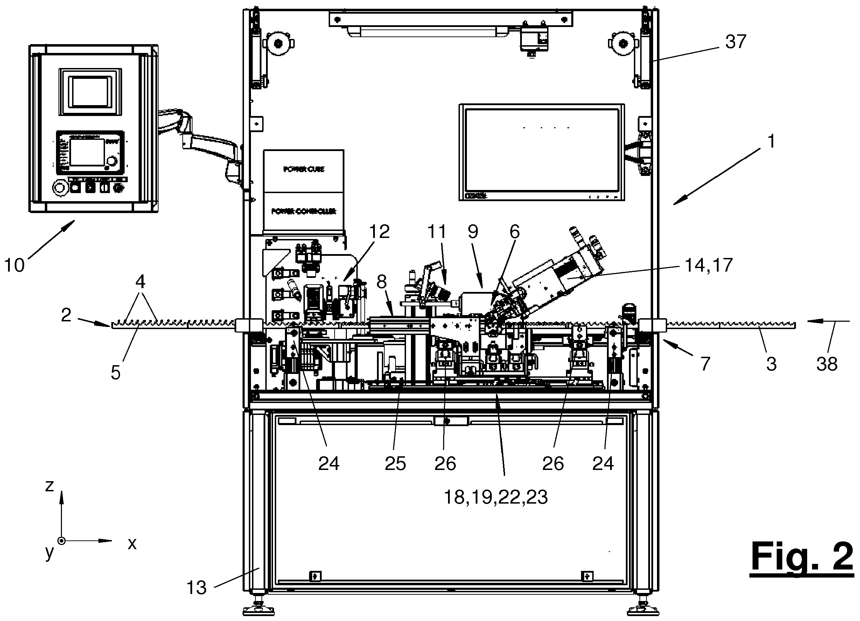

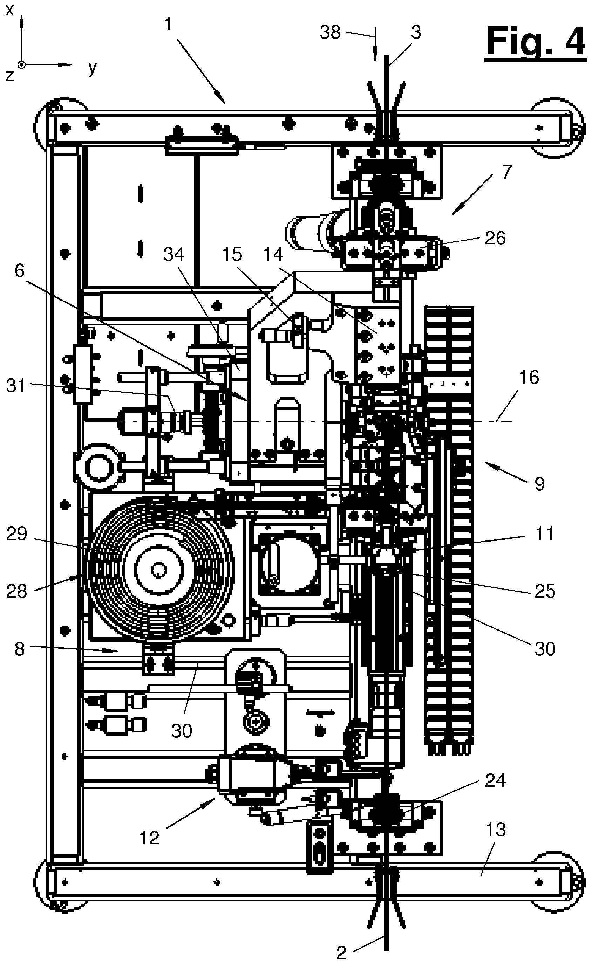

Die elektrische Pressschweißvorrichtung (6) beinhaltet eine stationäre bzw. gestellfeste Elektrode (19) und eine bewegliche Elektrode (18). Die Elektroden (18,19) sind vorzugsweise übereinander angeordnet, können alternativ aber auch eine andere gegenseitige Lage einnehmen. Die bewegliche Elektrode (18) ist an einem Schweißkopf (14) angeordnet, der mittels einer Zustellvorrichtung (17) die bewegliche Elektrode (18) an das Basisband (3) zustellt. Die bewegliche Elektrode (18) ist in einem Elektrodenhalter angeordnet, der seinerseits mit der Zustellvorrichtung (17) und mit einer Stromzuführung verbunden ist. Die steuerbare Zustellvorrichtung (17) weist z.B. einen pneumatischen oder elektromechanischen Linearantrieb auf. Die bewegliche Elektrode (18) kann wechselbar am Elektrodenhalter bzw. am Schweißkopf (14) angeordnet sein. In Figur 10 ist die bewegliche bzw. obere Elektrode (18) dargestellt. In Figur 1 bis 9 ist sie nicht sichtbar.

Die bewegliche Elektrode (18) weist gemäß Figur 10 an ihrer Frontseite eine Aufnahme (126) für ein Schneidelement (4) auf. Die Aufnahme (126) ist in ihrer Formgebung an die Form des Schneidelements (4) angepasst und weist hierfür eine entsprechende formschlüssige Kontur auf. Die Elektrode (18) ist ferner mit einer Saugeinrichtung (21) verbunden, die im Bereich der Aufnahme (126) mündet und das aufgenommene Schneidelement (4) mit Unterdruck festhält.

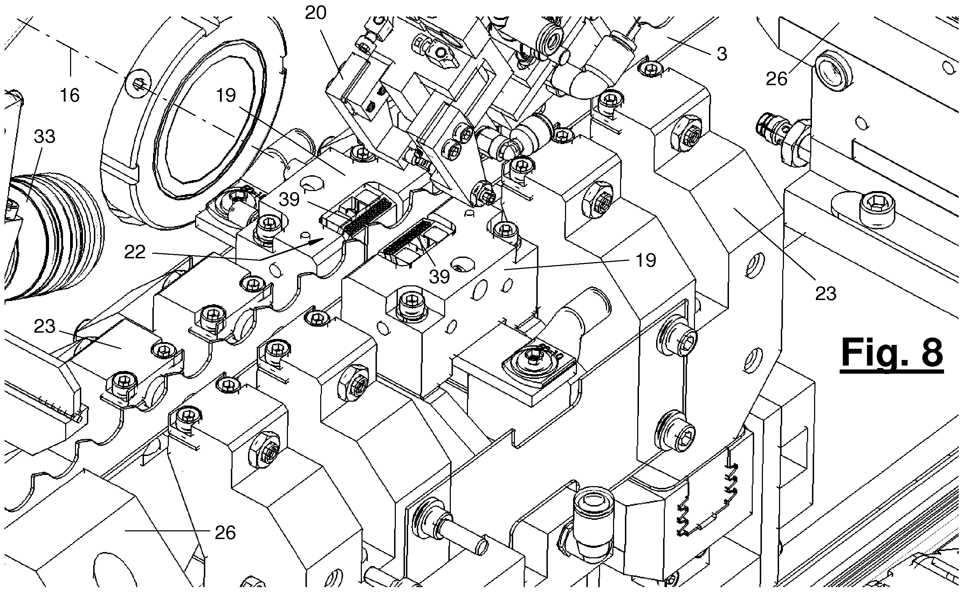

Ferner ist der Elektrode (18) gemäß Figur 8 eine Zentriereinrichtung (20) zugeordnet, die ebenfalls am Elektrodenhalter montiert ist und mit der das aufgenommene Schneidelement (4) an der Aufnahme (126) zentriert wird. Diese Zentrierung erfolgt in einer y-Richtung quer zur axialen Erstreckung in x-Richtung und zur Zuführrichtung (38) des Basisbandes (3). Die Zentriereinrichtung (20) weist z.B. zwei gesteuert beidseits an das Schneidelement (4) zustellbare Zentrierbacken auf.

Die stationäre und bevorzugt untere Elektrode (19) ist mittels eines Elektrodenhalters am Maschinengestell (13) starr montiert und ist ebenfalls mit der Stromzuführung verbunden. Die stationäre Elektrode (19) weist Elektrodenbacken auf, die beidseits an das Basisband (3) elektrisch leitend angepresst werden können. Figur 8 zeigt diese Anordnung.

Der stationären Elektrode (19) kann eine ebenfalls stationäre, steuerbare Spanneinrichtung (23) mit Spannbacken zugeordnet sein, die das Basisband (3) in der Prozess- bzw. Schweißstellung klemmt und fixiert. Die Spanneinrichtung (23) kann elektrisch isoliert sein, z.B. durch Kontaktelement aus Keramik an den Spannbacken. In der gezeigten Ausführung gemäß Figur 8 sind in Axialrichtung (38) vor und hinter der stationären Elektrode (19) solche Spanneinrichtungen (23) angeordnet.

Die Pressschweißvorrichtung (6) ist mit einer Schutzgaseinrichtung (22) versehen. Diese weist eine Schutzgasversorgung und eine oder mehrere Auslassdüsen (39) für das Schutzgas im Elektrodenbereich auf, die den Schutzgasstrom auf den Prozess- oder Schweißbereich richten.

Wie Figur 7 und 8 verdeutlichen, sind eine oder mehrere Auslassdüsen (39) an der stationäre Elektrode (19) angeordnet und in der gezeigten Elektrodenstellung nach oben gerichtet. Sie sind bevorzugt in die stationäre Elektrode (19) integriert. Sie sind z.B. jeweils in einer zentralen Ausnehmungen von gabelförmigen Elektrodenbacken und dadurch unmittelbar am Basisband (3) angeordnet. Die Gabelarme der Elektrodenbacken umgreifen die elektrisch isolierte Auslassdüse (39) und drücken beidseits in Schließstellung zur Stromübertragung gegen das Basisband. An der beweglichen Elektrode (18) können ebenfalls eine oder mehrere Auslassdüsen (39) angeordnet sein.

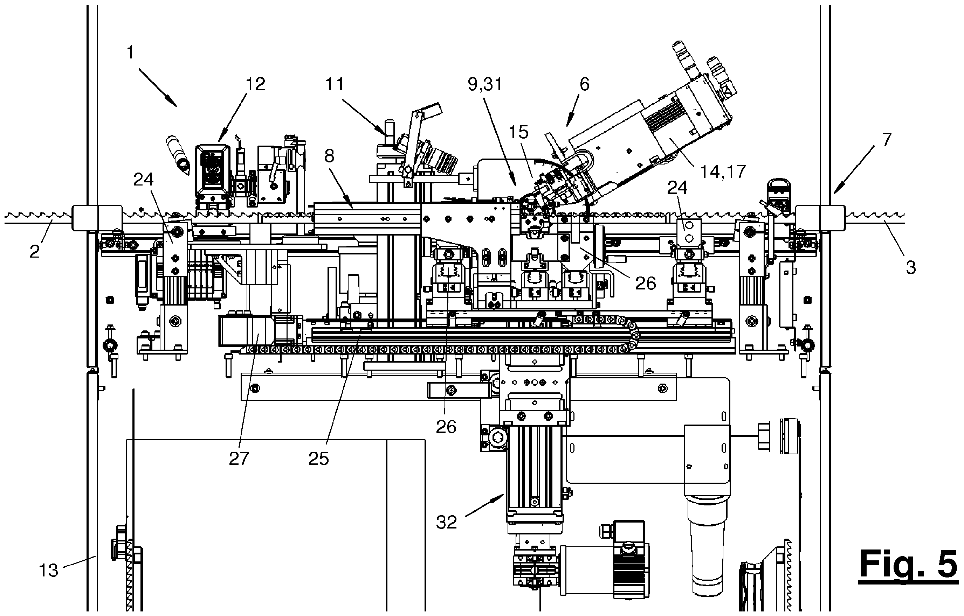

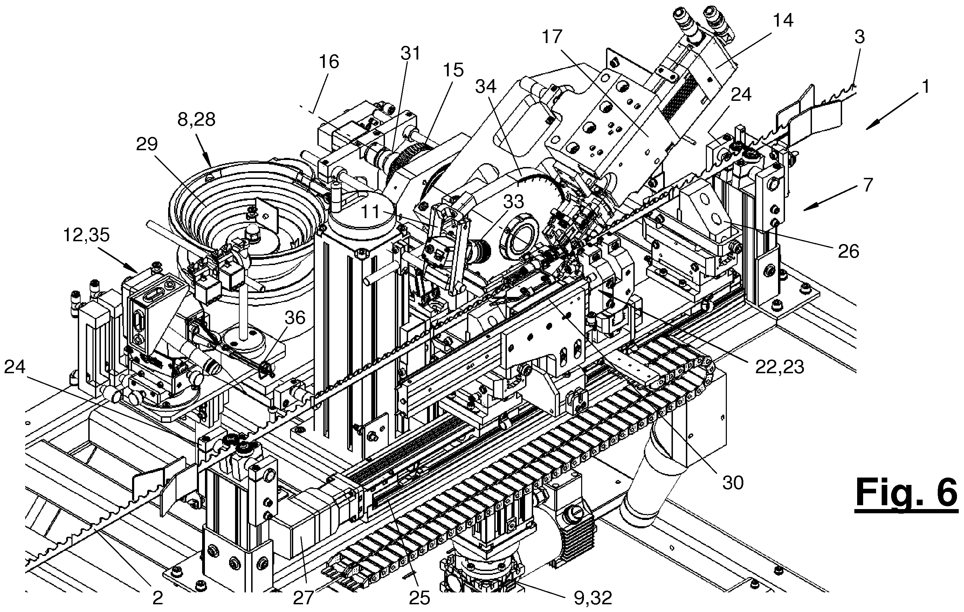

Die Fertigungseinrichtung (1) weist eine in Figur 5 und 6 gezeigte Sägebandzuführung (7) für das bevorzugt hochkant ausgerichtete Basisband (3) auf. Diese beinhaltet zum einen eine oder mehrere Sägebandführungen (24) an der Eingangs- und Ausgangsseite der Fertigungseinrichtung (1). Diese stützen und führen das Basisband (3). Die Führung kann z.B. durch eine untere und zwei seitliche, frei drehbare Führungsrollen erfolgen. Die seitlichen Rollen können schräg angestellt sein und zwar derart, dass sie beim Transport das Basisband (3) nach unten gegen die Führungsrolle drücken. Die bevorzugt stationär angeordnete Sägebandführung (24) definiert die Höhenlage des Basisbandes (3) im Prozessbereich.

Die Sägebandzuführung (7) weist ferner eine Vorschubeinrichtung (25) für das Basisband (3) auf. Die Vorschubeinrichtung (25) kann für einen kontinuierlichen oder intermittierenden Vorschub des Basisbands (3) bzw. Sägebands (2) sorgen. In den Ausführungsbeispielen ist die intermittierende Variante gezeigt, in der die Vorschubeinrichtung (25) eine reversierende Vorschubbewegung ausführt.

Die Vorschubeinrichtung (25) umfasst gemäß Figur 5 bis 7 einen Schlitten, der in Axial- oder Zuführrichtung (38) bzw. in x-Richtung am Maschinengestell (3) verschieblich gelagert und mit einem steuerbaren Antrieb (27) verbunden ist. Auf dem Schlitten sind in Axialrichtung vor und hinter dem Prozessbereich, den Elektroden (18,19) und den Spanneinrichtungen (23) steuerbare Klemmvorrichtungen (26) angeordnet, die mit ggf. elektrisch isolierten Klemmbacken beidseits an dem Basisband (3) angreifen und dieses klemmen.

Die Spanneinrichtungen (23) und die Klemmvorrichtungen (26) fixieren abwechselnd das Basisband (3). Für den Vorschub fixieren die Klemmvorrichtungen (26) das Basisband (3) und bewegen es in Axial- und Zuführrichtung (38) vorwärts, wobei zugleich die Spanneinrichtungen (23) und die stationäre Elektrode (19) geöffnet sind. Die Schrittweite des intermittierenden Vorschubs kann der Zahnteilung bzw. dem Zahnabstand des Basisbands (3) entsprechen. Am Ende des Vorschubschritts fallen die Spanneinrichtungen (23) wieder ein und fixieren das Basisband (3). Die Klemmvorrichtungen (26) können jetzt oder nach dem Schweißvorgang öffnen.

Nach dem Schweißvorgang und geöffneten bzw. zurückgezogenen Elektroden (18,19) kann die Vorschubeinrichtung (25) mit den geöffneten Klemmvorrichtungen (26) eine Reversierbewegung ausführen, wobei die Spanneinrichtungen (23) das Basisband (3) weiterhin fixieren. Danach schließen die Klemmvorrichtungen (26) wieder und führen einen erneuten Vorschubschritt mit dem Basisband (3) bei geöffneten Spanneinrichtungen (23) aus. Die Vorschubeinrichtung (25) kann alternativ nacheinander mehrere Vorschubschritte ausführen und erst nach einer längeren Wegstrecke in die Ausgangsposition zurückkehren.

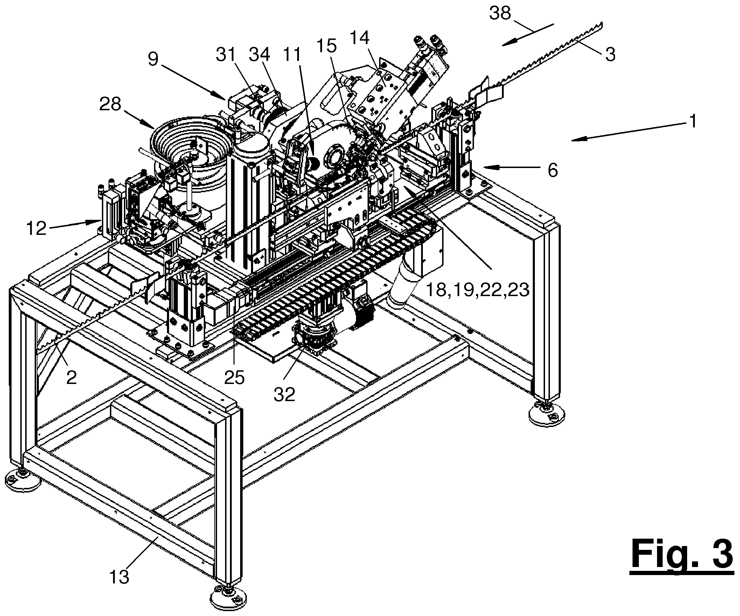

Die Fertigungseinrichtung (1) weist ferner eine Schneidelementzuführung (8) auf, die für die Zuführung von einzelnen Schneidelementen (4) an die bewegliche Elektrode (18) sorgt. Die Schneidelementzuführung (8) weist eine Bereitstellung (28) für einzelne Schneidelemente (4) auf. Diese wird in der gezeigten Ausführungsform gemäß Figur 3, 4 und 6 von einem Sammelbehälter (29) für einen Vorrat von einzelnen Schneidelementen (4) gebildet. Der Sammelbehälter (29) ist mit einer Vereinzelungsvorrichtung versehen, welche die Schneidelemente (4) nacheinander einzeln aus dem Sammelbehälter entnimmt und an eine Zuführvorrichtung (30) übergibt, die sie dann weiter zur beweglichen Elektrode (18) transportiert.

Die Zuführvorrichtung (30) weist z.B. einen in der besagten Axialrichtung (38) reversierend verfahrbaren Schlitten mit einem Schwenkarm auf, welcher eine Aufnahme für das vereinzelte Schneidelement (4) aufweist und gegebenenfalls auch mit einer Saugeinrichtung verbunden ist. Die Übergabe des vereinzelten Schneidelements (4) an die bewegliche Elektrode (18) und deren Aufnahmeorgan (126) erfolgt in einer angehobenen Rückzugstellung der Elektrode (18) bzw. des Schweißkopfs (14) und mit Abstand oberhalb des Basisbands (3).

Die Bereitstellung (28) kann alternativ von einer Trenneinrichtung gebildet sein, welche die z.B. walzen- oder dreieckförmigen Schneidelemente (4) von einer Stange abtrennt und an die Zuführvorrichtung (30) übergibt.

Der Schweißkopf (14) stellt die Elektrode (18) mit dem aufgenommenen Schneidelement (4) an die im Prozessbereich angeordnete und fixiert Aufnahmestelle (5) zu. Die Zustellung kann schräg zur besagten Axialrichtung (38) und von oben entlang einer Arbeitslinie (WL) erfolgen. Die bevorzugt lineare Zustellrichtung kann insbesondere im Wesentlichen senkrecht zur Neigung der Aufnahmestelle (5) ausgerichtet sein. Die nachfolgend beschriebenen Figuren 9 bis 14 verdeutlichen diese Anordnung.

Zur Anpassung an unterschiedliche Basisband-Geometrien kann der Schweißkopf (14) mit einer Stelleinrichtung (15) verbunden sein, mittels der er um eine durch den Prozessbereich gehende und quer zum Basisband (3) bzw. in y-Richtung ausgerichtete Drehachse (16) geschwenkt werden kann. Die Einstellung kann manuell oder mittels eines gesteuerten Antriebs und der in den Zeichnungen, insbesondere Figur 6 und 7, gezeigten Winkelskala erfolgen. Die Stelleinrichtung (15) ist an einem Korpus (34) angeordnet, der seinerseits gestellfest montiert oder mit einer nachfolgend erläuterten Justiervorrichtung (9) verbunden sein kann.

Die bewegliche Elektrode (18) befindet sich in der Rückzugstellung mit Abstand und schräg oberhalb des Basisbands (3) und der jeweiligen Aufnahmestelle (5). Für den Schweißvorgang wird die Elektrode (18) von der Zustelleinrichtung (17) vorwärts bewegt und presst das Schneidelement (4) gegen die Aufnahmestelle (5) bzw. die Zieloberfläche (T). Die stationäre Elektrode (19) kontaktiert das Basisband (3), so dass nach Einschalten der gesteuerten Stromzuführung und deren Stromquelle der Schweißstrom durch das Schneidelement (4) und das Basisband (3) fließt. Dabei ist auch die Schutzgaseinrichtung (22) eingeschaltet. Beim Schweißen kann die bewegliche Elektrode (18) bedarfsweise auch von der Zustelleinrichtung (17) nachgesetzt werden. Die Anpresskraft und der Anpressweg bzw. der Einsenkweg beim Schweißvorgang und der Plastifizierung der Kontaktbereiche kann gesteuert und gegebenenfalls geregelt werden. Nach Beendigung des Schweißvorgangs erfolgt der nächste Vorschubsschritt.

Die Fertigungseinrichtung (1) kann eine automatische Justiervorrichtung (9) für die Relativlage von Basisband (3) und Schweißkopf (14) aufweisen. Die Justiervorrichtung (9) kann zum Setup bei der Inbetriebnahme der Fertigungseinrichtung (1) und bei einem Formatwechsel des Basisband (3) benutzt werden. Sie kann auch zur laufenden oder intermittierenden Prozessüberwachung und bedarfsweisen automatischen Nachjustierung eingesetzt werden.

Lageabweichungen können z.B. bei der Aufnahmestelle (5) bzw. der Zieloberfläche (T) auftreten. Eine Lageabweichung kann unterschiedliche Ursachen haben, z.B. einen Wechsel, insbesondere Formatwechsel, eine Fertigungstoleranz oder eine Führungsungenauigkeit des Basisbands (3). Bei der Zustellung der beweglichen Elektrode (18) und des Schneidelements (4) können sich dadurch unterschiedliche Prozessbedingungen ergeben, die variierende Schweißergebnisse zur Folge haben können. In den nachfolgend beschriebenen Figuren 9 bis 14 sind Details hierzu angegeben. Mit der ggf. automatischen Justiervorrichtung (9) werden diese Ungenauigkeiten behoben und kompensiert.

In der gezeigten Ausführungsform von Figur 1 bis 8 wirkt die automatische Justiervorrichtung auf die Relativlage des Schweißkopfes (14) ein und positioniert diesen korrekt gegenüber der Aufnahmestelle (5) und dem mittels der Spanneinrichtung (23) fixierten Basisband (3). Die Justier- und Positionierkinematik kann auch umgekehrt sein, wobei das Basisband (3) gegenüber dem Schweißkopf (14) positioniert wird. Ferner ist auch eine beiderseitige Bewegung und Positionierung möglich.

Die automatische Justiervorrichtung (9) weist eine bevorzugt optische Erfassungseinrichtung (31) für die Position des Basisbands (3), insbesondere der aktuellen Aufnahmestelle (5) im Prozessbereich auf. Bei der vorerwähnten abweichenden Kinematik ist die Positionserfassung entsprechend geändert.

Die optische Erfassungseinrichtung (31) blickt auf den Justierbereich oder Prozessbereich und die Aufnahmestelle (5) und ist hierfür in geeigneter Weise im Bereich der Pressschweißvorrichtung (6) angeordnet. Die bevorzugt als elektronische Messkamera ausgebildete Erfassungseinrichtung (31) ist z.B. ebenfalls am Korpus (34) angeordnet und befindet sich an der dem Schweißkopf (14) gegenüberliegenden Korpusrückseite. Die Erfassungseinrichtung (31) ist dabei mit ihrer Blickachse fluchtend auf oder zumindest parallel zu der Drehachse (16) angeordnet und blickt durch den Korpus (34) auf den Prozessbereich. Die Drehachse (16) weist hierfür z.B. eine entsprechend große und den Korpus (34) durchsetzende Lagerhülse auf.

Die automatische Justiervorrichtung (9) weist ferner eine Positioniervorrichtung (32) auf, die nach dem Detektionsergebnis der Erfassungseinrichtung (31) gesteuert und ggf. geregelt werden kann und mit der bedarfsweise die Relativlage von Basisband (3) und Schweißkopf (14) geändert werden kann. Die Erfassung und evtl. Änderung der Relativlage erfolgen am Prozessbereich.

In den gezeigten Ausführungsbeispielen von Figur 1 bis 8 ist die Positioniervorrichtung (32) mit dem Schweißkopf (14) und somit auch mit dessen ebenfalls zu positionierender Elektrode (18) verbunden. Die Positioniervorrichtung (32) weist eine oder mehrere Positionierachsen auf. Im gezeigten Ausführungsbeispiel mit der schrägen Zustellrichtung des Schweißkopfes (14) bzw. seines Elektrodenhalters und der Elektrode (18) kann eine einachsige Positionierung genügen. Diese Positionierachse ist z.B. in der Vertikalen bzw. in z-Richtung ausgerichtet. Der Schweißkopf (14) wird dabei in der Höhe über den Zähnen (112) und der schrägen Aufnahmestelle (5) bzw. Zielfläche (T) verstellt. Die Positioniervorrichtung (32) kann zu diesem Zweck als einachsige Hubvorrichtung ausgebildet sein.

In den gezeigten Ausführungsbeispielen greift die Positionier- bzw. Hubvorrichtung (32) am Korpus (34) an und ist unter diesem angeordnet. Die Positioniervorrichtung (32) kann auch mit weiteren Komponenten der Fertigungseinrichtung (1), insbesondere mit der Erfassungseinrichtung (31) und einer nachfolgend erläuterten Prüfeinrichtung (11), verbunden sein. In den gezeigten Ausführungsbeispielen ist die Erfassungseinrichtung (31) am Korpus (34) befestigt und wird bei der Positionierbewegung mitgenommen. Die Bildauswertung der optischen Erfassung kann entsprechend ausgebildet und programmiert sein.

Bei der optischen Erfassung wird z.B. mittels einer Vermessung festgestellt, wo sich die detektierte Bezugstelle am Basisband (3) relativ zu einer Bezugsvorgabe der Erfassungseinrichtung (31), z.B. zur zentralen Blickachse oder zum Mittelpunkt des optischen Bild- und Messfelds, befindet. Alternativ kann auch bei einem entsprechend großen Blickwinkel eine Bezugsstelle am Schweißkopf (14), z.B. an der Spitze der Elektrode (18), optisch erfasst und in ihrer Lage relativ zur detektierten Bezugsstelle am Basisband (3) vermessen werden. Die detektierte Bezugsstelle am Basisband (3) kann die gesamte Aufnahmestelle (5) oder ein charakteristischer Teilbereich hiervon sein.

In den gezeigten Ausführungsbeispielen wird die Relativlage zur detektierten Bezugsstelle am Basisband (3) gegenüber einer Bezugsvorgabe der Erfassungseinrichtung (31) detektiert und vermessen. Bei der Positionierbewegung wird die Bezugsvorgabe der Erfassungseinrichtung (31) mitbewegt. Die optische Erfassung und die besagte Vermessung können während der Positionierbewegung fortgesetzt werden, bis die gewünschte Soll-Lagebeziehung erreicht ist. Die Positionierbewegung und die Positioniervorrichtung (32) können dadurch über die optische Erfassung geregelt werden. Die gefundene Position wird dann fixiert, so dass der Schweißvorgang beginnen kann.

Die automatische Justierung und Positionierung kann beim erwähnten Setup der Fertigungseinrichtung (1) und bei einem Wechsel, insbesondere Formatwechsel des Basisbands (3) durchgeführt werden. Dies kann eine einmalige Justierung sein, die für den anschließenden Schweißbetrieb bestehen bleibt. Die automatische Justierung und Positionierung kann auch während des Schweißbetriebs durchgeführt werden. Sie kann bei jedem Zahn (112) und jedem Schweißvorgang wiederholt werden. Sie kann auch nur bei einzelnen Zähnen und Schweißvorgängen und in Abständen durchgeführt bzw. periodisch oder unregelmäßig wiederholt werden.

Die Fertigungseinrichtung (1) kann ferner eine Prüfeinrichtung (11) für das Schweißergebnis beinhalten. Hierbei kann das Sägeband (2) mit dem jeweils gerade angeschweißten Schneidelement (4) erfasst und geprüft werden. Die Prüfung kann permanent bei jedem Schweißvorgang oder in Abständen, z.B. periodisch, erfolgen. Die Prüfeinrichtung (11) und/oder die Steuerung (10) kann außerdem bei permanenter Prüfung und positivem Prüfergebnis jeweils ein Startsignal für den nächsten Vorschubschritt und Schweißvorgang abgeben.

Die Erfassung und Prüfung kann auf optischen Wege erfolgen. Hierfür kann die Prüfeinrichtung (11) eine Erfassungseinrichtung (33), z.B. eine elektronischen Messkamera, aufweisen, die oberhalb und in Axial- oder Zuführrichtung (38) bzw. in x-Richtung vor dem Prozessbereich angeordnet ist. Die Erfassungseinrichtung (33) blickt dabei schräg von oben und in Axial- oder Zuführrichtung auf den Prozessbereich.

Die Prüfung betrifft z.B. die Größe, Form und Ausrichtung des Schneidelements (4) an sich und relativ zum Basisband (3). Insbesondere kann die zentrische Anordnung und die Größe des seitlichen Überstands des Schneidelements (4) am Basisband (3) in y-Richtung detektiert und geprüft werden. Die Erfassungseinrichtung (33) ist in den gezeigten Ausführungsbeispielen ebenfalls am Korpus (34) montiert und wird bei dessen Positionierbewegung mitbewegt. Alternativ kann die Prüfeinrichtung (11) stationär am Maschinengestell (13) befestigt sein.

Die Positioniervorrichtung (32) kann zwei Positionierachsen haben und zusätzlich eine Verstelleinrichtung (nicht dargestellt) für die Verstellung, insbesondere Verschiebung, des Schweißkopfs (14) mit seiner zu positionierenden Elektrode (18) in der y-Richtung quer zum Basisband (3) und zur Zuführrichtung (38) aufweisen. Der Schweißkopf (14) und seine Elektrode (18) können dadurch gegenüber der von der Erfassungseinrichtung (33) detektierten Ist-Lage ausgerichtet, insbesondere zentriert werden.

Außerdem kann alternativ oder zusätzlich die optische Erfassungseinrichtung (31) der Justriervorrichtung (9) zu den genannten Prüfzwecken eingesetzt werden und die Prüfeinrichtung (11) oder einen Teil davon bilden. Die optische Erfassungseinrichtung (31) kann das Schweißergebnis und die korrekte Lage des Schneidelements (4) an der Aufnahmestelle (5) bzw. am Zahn (112), insbesondere in der x- und z-Richtung feststellen.

Die Fertigungseinrichtung (1) weist ferner eine Nachbehandlungseinrichtung (12) für das Sägeband (2) mit den angeschweißten Schneidelementen (4) auf. Die Nachbehandlung kann z.B. thermisch und durch eine Erwärmung des Sägebands (2) erfolgen. Sie wird in Axial- oder Vorschubrichtung (38) hinter der Pressschweißvorrichtung (6) und gegebenenfalls der Prüfeinrichtung (11) durchgeführt.

Die Nachbehandlungseinrichtung weist in den gezeigten Ausführungsbeispielen einen Heizeinrichtung (35) für das Sägeband (2) auf. Dies ist z.B. eine induktive Heizeinrichtung, die eine oder mehrere elektrische Spulen (36) aufweist, durch deren elektromagnetisches Feld das Sägeband (2) beim Transport bewegt wird.

Die Nachbehandlungseinrichtung (12) kann eine Sensorik (40) zur Erfassung des Behandlungsergebnisses aufweisen. Dies kann z.B. ein Temperatursensor, insbesondere Infrarot-Sensor, sein, der die aktuelle Temperatur des Sägebands (2) bevorzugt berührungslos detektiert. Die Heizeinrichtung (35) kann gesteuert sein. Sie kann alternativ in Abhängigkeit vom Detektionsergebnis geregelt sein. Die Nachbehandlungseinrichtung (12) kann gestellfest oder beweglich, insbesondere zustellbar, angeordnet sein. In den Zeichnungen ist die Spule (36) zur besseren Übersicht distanziert vom Basisblatt (3) dargestellt.

Die Steuereinrichtung (10) steuert die gesamten Komponenten und Funktionen in der Fertigungseinrichtung (1). Sie kann eine in Figur 1 gezeigte Anzeige- und Bedienvorrichtung aufweisen. Die Steuereinrichtung (10) ist insbesondere mit der Pressschweißvorrichtung (6) und der Stromquelle bzw. Stromzuführung sowie mit der Sägebandzuführung (7), der Schneidelementzuführung (8), der Justiervorrichtung (9), der Prüfeinrichtung (11) und der Nachbehandlungseinrichtung (12) verbunden. Die Fertigungseinrichtung (1) kann vollautomatisch arbeiten. Ein Bediener wird nur zum erstmaligen Zuführen und Einlegen des ggf. von einem Coil abgezogenen Basisbands (3) und zum Befüllen des Sammelbehälters (29) benötigt. Diese Vorgänge können ebenfalls automatisiert werden.

Nachfolgend werden die Figuren 9 bis 14 erläutert, die Details zur vorbeschriebenen Fertigungseinrichtung (1) zeigen.

Für das Herstellen von Sägeblättern, insbesondere Sägebändern (2), wird auch in diesem Beispiel von einem Werkstück ausgegangen, wie in Figur 9 schematisch wiedergegeben. Es handelt sich hierbei um ein Band (110), beispielsweise aus Blech, mit einer Dicke von einigen zehnteln Millimeter bis zu einigen Millimetern, die durch Sägen, Schneiden oder Stanzen in die angegebene Form gebracht werden. Das Werkstück (110) wird in der Praxis normalerweise in relativ großer Länge auf Coils geliefert, wobei es in einer Richtung quer zur Fläche der Zeichnung zu einem Coil gewickelt wird. Das Werkstück bzw. Band (110) entspricht der vorbeschriebenen Basisband (3).

Die Form des Werkstücks (110) kennzeichnet sich durch eine Aufeinanderfolge von vorab definierten Segmenten (a..f), worin im Prinzip immer ein identischer Sägezahn (112) auf einem festen gegenseitigen Teilungsabstand angebracht ist. Statt aus aufeinanderfolgenden identischen Sägezähnen geformt zu sein, kann das Werkstück übrigens unter Umständen auch komplexere Segmente umfassen, beispielsweise mit einer Serie von Sägezähnen, die untereinander in Form und Teilungsabstand unterschiedlich sein können.

Eine nominale, d.h. vorgesehene, Höhe der Sägezähne (112) ist schematisch mit einer Punktlinie (N) auf der Zeichnung in Figur 9 und 10 angegeben. Diese Punktlinie durchschneidet eine schief stehende Zieloberfläche (T) der Sägezähne (112) circa auf halbem Weg, wo dann eine Sägezahnspitze (115) angebracht werden muss, siehe Figur 10. Die Zieloberfläche (T) entspricht der vorbeschriebenen Aufnahmestelle (5). Als Folge von fast unvermeidlichen Produktionstoleranzen liegt diese Zieloberfläche (T) bei manchen Sägezähnen (112c, 112e) höher oder niedriger als beabsichtigt. Diese Abweichung (dz) in Höhenrichtung ist auf der Abbildung schematisch angedeutet und kann aufgrund einer falschen Sägezahnform, einer falschen Positionierung des Bandes, einem falschen Teilungsabstand des Sägezahns, hinsichtlich eines vorhergegangenen Sägezahns, oder vieler anderer Faktoren entstehen. Das erfindungsgemäße Bearbeitungsgerät ist in der Lage eine derartige Abweichung angemessen und effizient zu korrigieren.

Eine Ausführungsform eines derartigen Bearbeitungsgerätes ist in Figur 10 in Seitenansicht und in Figur 3 von oben schematisch wiedergegeben. Das Bearbeitungsgerät enthält Bearbeitungsmittel, die in der Lage und darauf ausgerichtet sind, mit einem dafür vorgesehenen Bearbeitungsorgan (125) eine gewünschte Bearbeitung an der Stelle der Zieloberfläche (T) in den aufeinanderfolgenden Segmenten (a..f) auszuführen. Das Bearbeitungsgerät entspricht der vorbeschriebenen Fertigungseinrichtung (1). Das Bearbeitungsorgan (125) ist eine Variante des vorbeschriebenen Schweißkopfs (14) und der Zustellvorrichtung (17).

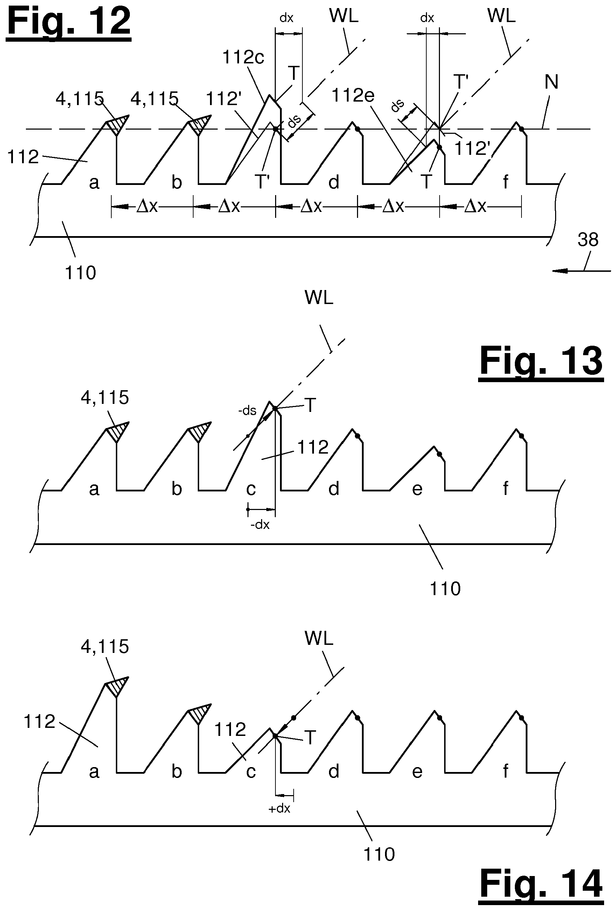

Dazu wird das Werkstück (110) gemäß Figur 12 schrittweise mit Schritten ΔX in eine Verschieberichtung (38) bzw. in Richtung x an einer Arbeitslinie (WL) des Bearbeitungsorgans (125) vorbei geführt. Das Bearbeitungsorgan (125) geht von einem ersten Manipulator (120) aus, der das Bearbeitungsorgan (125) entlang dieser Arbeitslinie (WL) bewegt und zur Zieloberfläche (T) bringt. Der erste Manipulator (120) umfasst beispielsweise ein lineares Steuerungselement, wie z.B. einen pneumatischen Druckzylinder, mit einer linear steuerbaren Verbindungsstange bzw. Kolbenstange (122), die am Ende das Bearbeitungsorgan (125) trägt.

Das Bearbeitungsorgan (125) umfasst eine Schweißelektrode (18), die an einem der Pole an eine geeignete elektronisch geregelte Starkstromspeisung gekoppelt ist. Der gegenübergestellte Pol der Speisung ist mit dem Werkstück (110) verbunden, damit ein Stromkreis geschlossen wird, sobald das Bearbeitungsorgan (125) mit der Zieloberfläche (T) bzw. der Aufnahme (5) des Sägeblatts (110) in Kontakt tritt. Die Schweißelektrode (18) hat einen schematisch gezeichneten Greifmund (126), worin ein zu schweißender Teil (4,115) aus einem Vorrat bzw. von der Zuführvorrichtung (30) aufgenommen werden kann und mit einer korrekten Orientierung auf die Zieloberfläche positioniert wird. Der Greifmund (126) entspricht der vorbeschriebenen formschlüssigen Aufnahme (126) und kann mit der Saugeinrichtung (21) verbunden sein.

In diesem Fall handelt es sich bei dem Schneidelement (4) um die besagten Sägezahnspitzen (115), die aus einem Hartmetall hergestellt wurden und die auf den Sägezähnen (112a..112f) angebracht werden müssen, um dem Sägeblatt (2) seine gewünschten Eigenschaften zu geben. Obwohl die Sägezahnspitzen (115) auf den Zeichnungen in y-Richtung gesehen als ein mehr oder weniger reines Dreieck gezeichnet sind, haben sie in der Praxis eine leicht konkave Oberfläche, womit sie gegen einen Sägezahn (112) gesetzt werden, damit ein Schweißstrom anfänglich einem wichtigen Kontaktwiderstand ausgesetzt ist, der sich auf einen beschränkten Teil konzentrieren wird. Dies führt zur gewünschten Wärmeentwicklung und Schweißformung. Darüber hinaus können auch ganz anders geformte Sägezahnspitzen appliziert werden, entsprechend dem spezifischen Bedarf, bspw., außer andere polygonale Formen, auch zylindrische und teilweise kugelförmige Spitzen gemäß Figur 7.

In Figur 10 und 11 ist wiedergegeben, wie eine derartige Sägezahnspitze (115), auf einem Sägezahn (112a) der gezeigten Reihe, korrekt angebracht wird und auf dem folgenden Sägezahn (112b) angebracht werden soll. Ein dritter Sägezahn (112c) liegt jedoch in z-Richtung höher als die Nominallinie (N), wodurch hier eine falsche Platzierung folgen würde, wenn nicht vor dieser falschen Lage korrigiert werden würde. Dasselbe gilt sinngemäß für den fünften Sägezahn (112e) in der gezeigten Reihe, der niedriger liegt.

Mit dem Blick auf derartige Korrekturen für den tatsächlichen Platz der Zieloberfläche (T), beinhaltet das Bearbeitungsgerät Erkennungsmittel in Form eines Kamerasystems (130) mit einem elektrischen Bildsensor. Das Kamerasystem (130) blickt gemäß Figur 10 und 11 auf die Prozessstelle am Zahn (112b), an dessen Zieloberfläche (T) gerade eine Sägezahnspitze (115) angeschweißt werden soll.

Das Bearbeitungsgerät beinhaltet in diesem Beispiel außerdem ein zweites Kamerasystem (140), das in der Lage ist und darauf ausgerichtet ist, auf übereinstimmende Art eine eventuelle Abweichung (dy) in der Breitenrichtung (y) numerisch festzustellen und als Maß für eine auszuführende Korrektur abzugeben, siehe Figur 11. Die Erkennungsmittel bzw. Kamerasysteme (130,140) entsprechen den vorbeschriebenen optischen Erfassungseinrichtungen (31,33) und sind Bestandteil der vorbeschriebenen Justiervorrichtung (9) und ggf. der Prüfeinrichtung (11).

Auf Figur 12 ist vom dritten und fünften Sägezahn (112c, 112e) sowohl die tatsächliche Position wiedergegeben als auch, mit Punktlinie, der betreffende Sägezahn (112') mit der nominalen, erwarteten Position und Form. Auch ist die Arbeitslinie WL eingezeichnet die circa auf halbem Weg die nominale Zielfläche (T') circa senkrecht schneidet, aber einen Abstand (dx) von der übereinstimmenden Position auf der tatsächlichen Zielfläche (T) entfernt liegt. Diese Abweichung (dx) der Arbeitslinie (WL) des Bearbeitungsorgans (125) wird, vom ersten Kamerasystem (130) das in Seitenansicht ein Bild rundum die Zieloberfläche aufnimmt, als derartige erkannt und als numerischer Wert bestimmt. Das Kamerasystem (130) misst diesen Abstand als eine Abweichung von der ersten Ziellinie (TL1), die auf Figur 11 zu Darstellungszwecken wiedergegeben wird und welche die Arbeitslinie (WL) in der Höhe der Zieloberfläche (T) senkrecht schneidet.

Zur Korrektur wird das Werkstück (110) in einem übereinstimmenden Abstand (dx) in die Verschieberichtung zurück gesetzt. Im Beispiel werden dafür die Verschiebemittel durch dazu vorhergesehene Korrekturmittel, in Übereinstimmung mit der damit auszuführenden Korrektur (dx), gesteuert, damit die Situation von Figur 13, bei zu hohem Sägezahn (112c) beziehungsweise die Situation von Figur 14 bei zu niedrigem Sägezahn (112e), erreicht wird. Bei dieser Variante der Justiervorrichtung (9) wird die Relativlage von Bearbeitungsorgan (125) und Werkstück (110) durch eine Verstellung des Werkstücks (110) in x-Richtung mittels der Sägebandzuführung (7) oder der Vorschubeinrichtung (25) bewirkt. Die Positioniervorrichtung (32) wird dabei von der Vorschubeinrichtung (25) gebildet.

Da die Zieloberfläche (T) also zwar korrekt auf der Arbeitslinie (WL) positioniert ist, befindet sich diese nun in einem geringeren Abstand (-ds) beziehungsweise größeren Abstand (+ds) zur Ausgangsposition des Bearbeitungsorgans (125). Für die Korrektur erzeugt der Manipulator (120) des Bearbeitungsorgans (125) hierfür einen entsprechend kleineren beziehungsweise größeren Vorschub.

Diese Korrektur kann auf einfache Weise aus der gemessenen Korrektur dx von der Abweichung in der x-Richtung abgeleitet werden und verhält sich wie ds = dx/cosα zu α... 1/2n und ds = 0 zu α = 1/2n, wobei α der Winkel ist, der die Arbeitslinie (WL) hinsichtlich der Verschieberichtung (x) des Werkstücks bildet. Mit α = 1/2n, bzw. einer sauberen vertikalen Aufstellung der Arbeitslinie, wird lediglich in die vertikale z-Richtung wie im verschriebenen Ausführungsbeispiel von Figur 1 bis 8 korrigiert.

Um vor einer eventuellen Abweichung (dy), in der Seitenrichtung y der Zieloberfläche (T), des tatsächlichen Sägezahns (112), hinsichtlich der genannten, nominalen Position (T'), aus zu korrigieren, wird diese Abweichung auf entsprechende Weise mit dem zweiten Kamerasystem (140), das in der Verschieberichtung x ein Bild rundum die Zieloberfläche (T) aufnimmt, siehe Figur 11, geortet. Auch diese Abweichung wird hinsichtlich der nominalen Ziellinie (TL2), die die Arbeitslinie (WL) auf der Höhe der Zieloberfläche schneidet und die zur x-Richtung geneigt ist, gemessen.

Der erste Manipulator (120) ist an einen nicht genauer dargestellten zweiten Manipulator gekoppelt, der an den ersten Manipulator (120) einen Ausschlag in die y-Richtung anbringen kann, um vor einer eventuellen, also georteten, Abweichung dy in der y-Richtung der Zieloberfläche (T), zu korrigieren. Für den zweiten Manipulator wird auch von einem linearen Steuerungselement ausgegangen, wie z.B. einem pneumatischen Druckzylinder, der sich proportional ansteuern lässt. Auf diese Weise wird die Arbeitslinie WL von dem Bearbeitungsorgan (125) zur tatsächlichen Zieloberfläche (T) versetzt.

Ferner dienen beide Kamerasysteme (130,140) zur vollständigen Qualitätskontrolle eines jeden Sägezahns (112), nachdem darauf eine Sägezahnspitze (115) befestigt wurde. Sollte eine Sägezahnspitze (115) unverhofft fehlen, beispielsweise weil der Vorrat erschöpft war, ein Sägezahn ausgelassen wurde oder eine Sägezahnspitze (115) nicht gut befestigt wurde, oder eine Sägezahnspitze unverhofft nicht korrekt angebracht ist, dann wird auch dies umgehend durch die Erkennungsgeräte (130,140) festgestellt und signalisiert.

Auch werden die georteten Abweichungen von der nominalen Position gespeichert und analysiert. Wird daraus eine systematische Abweichung oder ein systematischer Verlauf abgeleitet, kann die Steuerungssoftware des Bearbeitungsgerätes davor korrigieren, beispielsweise indem die Verschiebevorrichtungen, mit denen das Werkstück positioniert wird, davor ausgeglichen werden.

Das Bearbeitungsgerät und das Verfahren tragen in erheblichem Maße zur Qualität des Endresultats bei und brauchen dazu lediglich minimal in den normalen Arbeitsprozess einzugreifen.

Abwandlungen der gezeigten und beschriebenen Ausführungsbeispiele sowie der vorgenannten Varianten sind in verschiedener Weise möglich. Insbesondere können die Merkmale der Ausführungsbeispiele und der genannten Varianten beliebig miteinander kombiniert und ggf. auch ausgetauscht werden.

Bei der Ausführungsform von Figur 9 bis 14 wird von Ziellinien ausgegangen, die etwa senkrecht auf die nominale Position des Werkstücks ausgerichtet sind, aber stattdessen können auch Ziellinien mit einem Schiefstand ausgewählt werden, insbesondere wenn das eine bessere Sichtlinie abliefern würde.

Ferner wird in diesem Ausführungsbeispiel von einer Arbeitslinie des Bearbeitungsorgans ausgegangen, die etwa entlang einer mittleren senkrechten Linie auf der Zieloberfläche (T) verläuft. Das Bearbeitungsorgan kann sich anstelle dessen auch von einem anderen Eck aus der Zieloberfläche nähern und die Zieloberfläche auch im Mittelpunkt treffen. In der Praxis kann das Bearbeitungsorgan auch an ein weiteres Steuerungselement gekoppelt sein, wodurch die Arbeitslinie einstellbar und immer verstellbar ist.

Die Schneidelemente (4) können an die stationäre Elektrode (19) übergeben werden, wobei das Basisband (3) mit der anderen Elektrode (18) beweglich gehalten und an das Schneidelement (4) zugestellt wird. In weiterer Abwandlung ist eine gegenseitige Zustellung möglich. Ferner kann die Elektrodenlage (18,19) umgedreht sein.

Statt der vorbeschriebenen elektrischen Widerstands-Pressschweisstechnik kann eine Löttechnik mit elektrischer Widerstands-Erwärmung unter Pressdruck eingesetzt werden.

In Abwandlung der gezeigten Ausführungsbeispiele kann die automatische Justiervorrichtung (9) entfallen. Sie kann alternativ das Basisband (3) bewegen und kann z.B. der Sägebandzuführung (7) zugeordnet sein. Die Erfassungseinrichtung (31) kann in anderer Weise ausgebildet und angeordnet sein. Sie kann z.B. taktil und mit Berührungskontakt arbeiten. Sie kann außerdem vom Korpus (34) getrennt und stationär angeordnet sein. Sie kann sich auch in Umkehr der gezeigten Lage an der Vorderseite oder Bedienseite der Fertigungseinrichtung (1) befinden.

Die Prüfeinrichtung (11) kann ebenfalls entfallen oder alternativ in anderer Weise ausgebildet sein. Eine Qualitätsprüfung des Schweißergebnisses kann z.B. durch eine Widerstandsprüfung an der Schweißstelle mittels einer angelegten elektrischen Spannung oder auf andere Weise erfolgen. Eine Prüfung der Lage und Abmessung, insbesondere der zentralen Lage der angeschweißten Schneidelemente (4) kann auf taktilem Weg mit Berührungskontakt erfolgen. Das Prüfungsergebnis kann außerdem zu einer Nachbearbeitung, z.B. einer spanabhebenden Bearbeitung, führen. Dies kann ggf. an der Nachbehandlungseinrichtung (12) erfolgen.

Die Nachbehandlungseinrichtung (12) kann ebenfalls entfallen oder alternativ in anderer Weise ausgebildet sein. Insbesondere können hier andere Arten von Nachbehandlungen oder Nachbearbeitungen am geschweißten Sägeband (2) erfolgen. Dies kann z.B. eine Beschichtung, eine spanende Bearbeitung oder dergleichen sein.

In den gezeigten Ausführungsformen der Fertigungseinrichtung (1) sind die genannten Komponenten jeweils einfach vorhanden. Alternativ ist eine Mehrfachanordnung möglich. Ferner können mehrere Sägebänder (2) parallel in der beschriebenen Weise gefertigt werden.

Ferner können die Fertigungseinrichtung (1) und das Fertigungsverfahren bei einer entsprechenden Anpassung auf für andere Sägeblätter (2), insbesondere Kreissägeblätter, eingesetzt werden.

### BEZUGSZEICHENLISTE

- 1: Fertigungseinrichtung
- 2: Sägeband, Sägeblatt
- 3: Basisband gezahnt, Werkstück
- 4: Schneidelement, Sägezahnspitze
- 5: Aufnahmestelle
- 6: Pressschweißvorrichtung
- 7: Sägebandzuführung
- 8: Schneidelementzuführung
- 9: Justiervorrichtung
- 10: Steuereinrichtung
- 11: Prüfeinrichtung
- 12: Nachbehandlungseinrichtung
- 13: Gestell
- 14: Schweißkopf, Manipulator
- 15: Stelleinrichtung
- 16: Achse, Drehachse
- 17: Zustellvorrichtung,
- 18: Elektrode beweglich
- 19: Elektrode stationär
- 20: Zentriervorrichtung
- 21: Saugeinrichtung
- 22: Schutzgaseinrichtung
- 23: Spanneinrichtung
- 24: Sägebandführung
- 25: Vorschubeinrichtung
- 26: Klemmvorrichtung
- 27: Antrieb
- 28: Bereitstellung
- 29: Sammelbehälter mit Vereinzelungsvorrichtung
- 30: Zuführvorrichtung
- 31: Erfassungseinrichtung, Kamera
- 32: Positioniervorrichtung, Hubeinrichtung
- 33: Erfassungseinrichtung, Kamera
- 34: Korpus
- 35: Heizeinrichtung induktiv
- 36: Spule
- 37: Schutzeinrichtung
- 38: Axialrichtung, Zuführrichtung, Vorschubrichtung
- 39: Auslassdüse
- 40: Sensorik

- 110: Werkstück, Band, Scheibe
- 112: Segment, Sägezahn
- 112a..f: Sägezahn
- 112': Sägezahn
- 115: Sägezahnspitze, Punkt
- 120: Manipulator, Druckzylinder
- 122: Verbindungsstange, Kolbenstange
- 125: Bearbeitungsorgan, Elektrode
- 126: Aufnahme, Aufnahmeorgan, Greifmund
- 130: Erkennungsmittel, Erfassungseinrichtung, Kamerasystem
- 140: Erkennungsmittel, Erfassungseinrichtung, Kamerasystem

- N: Punktlinie
- T: Zieloberfläche
- T': Zieloberfläche
- TL1: Ziellinie erste
- TL2: Ziellinie zweite
- WL: Arbeitslinie
- d: Abstand, Abweichung
- x,y,z: Richtung

## Patentansprüche

1. Fertigungseinrichtung für Sägeblätter (2), insbesondere Sägebänder, insbesondere zum Schweißen oder Löten von einzelnen Schneidelementen (4) an Aufnahmestellen (5) an einem zugeführten Basisblatt (3), insbesondere Basisband, mit einer Schneidelementzuführung (8) und einer elektrischen Pressschweissvorrichtung (6) mit einem zustellbaren Schweißkopf (14), **dadurch**
**gekennzeichnet, dass** die Fertigungseinrichtung (1) eine automatische Justiervorrichtung (9) aufweist, die dazu ausgebildet ist, die Relativlage von Basisblatt (3) und Schweißkopf (14) am Prozessbereich zu erfassen und bedarfsweise einzustellen oder nachzujustieren, wobei die automatische Justiervorrichtung (9) eine optische Erfassungseinrichtung (31,130) für die Position des Basisblatts (3), insbesondere der aktuellen Aufnahmestelle (5) oder der Zielfläche (T), im Prozessbereich aufweist, welche mit Abstand vom Prozessbereich angeordnet ist und quer zur Basisblattebene auf den Prozessbereich blickt und wobei die automatische Justiervorrichtung (9) eine nach dem Erfassungsergebnis gesteuerte Positioniervorrichtung (32) für die bedarfsweise Änderung der Relativlage von Basisblatt (3) und Schweißkopf (14) aufweist.

2. Fertigungseinrichtung nach Anspruch 1, **dadurch gekennzeichnet, dass** die Fertigungseinrichtung (1) eine Prüfeinrichtung (11) für das Schweißergebnis, insbesondere für das Sägeblatt (2) mit dem angeschweißten Schneidelement (4), aufweist.

3. Fertigungseinrichtung nach Anspruch 1 oder 2,
**dadurch gekennzeichnet, dass** die Fertigungseinrichtung (1) eine Nachbehandlungseinrichtung (12) für das Sägeblatt (2) mit den angeschweißten Schneidelementen (4) aufweist.

4. Fertigungseinrichtung nach Anspruch 1, 2 oder 3,
**dadurch gekennzeichnet, dass** die elektrische Pressschweissvorrichtung (6) eine Schutzgaseinrichtung (22), insbesondere an einer oder beiden Elektroden (18,19), aufweist.

5. Fertigungseinrichtung nach einem der vorhergehenden Ansprüche, **dadurch gekennzeichnet, dass** die Positioniervorrichtung (32) mit dem Schweißkopf (14) verbunden ist und eine oder mehrere Positionierachsen aufweist.

6. Fertigungseinrichtung nach Anspruch 1, **dadurch gekennzeichnet, dass** die Fertigungseinrichtung (1) einen mit der Positioniervorrichtung (32) verbundenen Korpus (34) aufweist, an dem der Schweißkopf (14) mit einer Stelleinrichtung (15), die Erfassungseinrichtung (31,130) und die Prüfeinrichtung (11) angeordnet sind, wobei die optische Erfassungseinrichtung (31,130) durch eine hohle Drehachse (16) der Stelleinrichtung (15) des Schweißkopfs (14) blickt.

7. Fertigungseinrichtung nach Anspruch 1 oder 6,
**dadurch gekennzeichnet, dass** die optische Erfassungseinrichtung (31,130) als elektronische Messkamera ausgebildet ist.

8. Fertigungseinrichtung nach einem der vorhergehenden Ansprüche, **dadurch gekennzeichnet, dass** die Nachbehandlungseinrichtung (12) eine Heizeinrichtung (35), insbesondere eine induktive Heizeinrichtung, für das Sägeband (2) aufweist, wobei die Nachbehandlungseinrichtung (12), insbesondere die Heizeinrichtung (35), regelbar ist und einen Sensor, insbesondere einen berührungslosen Temperatursensor aufweist.

9. Fertigungseinrichtung nach einem der vorhergehenden Ansprüche, **dadurch gekennzeichnet, dass** die elektrische Pressschweissvorrichtung (6) eine stationäre, insbesondere untere Elektrode (19) und eine zugeordnete stationäre Spanneinrichtung (23) für das Basisband (3) aufweist, wobei der Schweißkopf (14) eine bewegliche, insbesondere obere Elektrode (18) und einen Elektrodenhalter mit einer Zustellvorrichtung (17) aufweist.

10. Fertigungseinrichtung nach einem der vorhergehenden Ansprüche, **dadurch gekennzeichnet, dass** der Schweißkopf (14) eine der Elektrode (18) zugeordnete Zentriervorrichtung (20) für das Schneidelement (4) aufweist.

11. Fertigungseinrichtung nach einem der vorhergehenden Ansprüche, **dadurch gekennzeichnet, dass** die Schneidelementzuführung (8) eine Zuführvorrichtung (30) für einzelne Schneidelemente (4) zu dem in Rückzugstellung befindlichen Schweißkopf (14) aufweist.

12. Verfahren zum Fertigen von Sägeblättern (2), insbesondere Sägebändern, insbesondere zum Schweißen oder Löten von einzeln zugeführten Schneidelementen (4) an Aufnahmestellen (5) an einem zugeführten Basisblatt (3), insbesondere Basisband, mittels einer elektrischen Pressschweissvorrichtung (6) mit einem zustellbaren Schweißkopf (14), **dadurch gekennzeichnet, dass** die Relativlage von Basisblatt (3) und Schweißkopf (14) am Prozessbereich mittels einer automatischen Justiervorrichtung (9) erfasst und bedarfsweise eingestellt oder nachjustiert wird, wobei mit einer optischen Erfassungseinrichtung (31,130) die Position des Basisblatts (3), insbesondere der aktuellen Aufnahmestelle (5) oder der Zielfläche (T), im Prozessbereich erfasst wird, wobei die optische Erfassungseinrichtung (31,130) mit Abstand vom Prozessbereich angeordnet ist und quer zur Basisblattebene auf den Prozessbereich blickt und wobei die Relativlage von Basisblatt (3) und Schweißkopf (14) mit einer nach dem Erfassungsergebnis gesteuerten Positioniervorrichtung (32) bedarfsweise geändert wird.

13. Verfahren nach Anspruch 12, **dadurch gekennzeichnet, dass** die Scheidelemente (4) jeweils an eine schäge Aufnahmestelle (3) oder Zielfläche (T) eines Zahns (112) am Basisblatt (3) mit einer im wesentlichen senkrecht darauf stehenden Arbeitslinie WL zugestellt und insbesondere mit Schutzgas geschweisst oder gelötet werden.

14. Verfahren nach einem der Ansprüche 12 bis 13, **dadurch gekennzeichnet, dass** zur Detektion der Relativlage von Basisblatt (3) und Schweißkopf (14) die gesamte Aufnahmestelle (5) oder ein charakteristischer Teilbereich hiervon erfasst und die Lage relativ zu einer Bezugsstelle am Schweißkopf (14) oder zu einer Bezugsvorgabe der Erfassungseinrichtung (31) detektiert und vermessen wird.

15. Verfahren nach einem der Ansprüche 12 bis 14, **dadurch gekennzeichnet, dass** das Prozessergebnis mit einer Prüfeinrichtung (11) optisch kontrolliert wird und das Sägeblatt (2) mit den Schneidelementen (4) mit zeitlicher und örtlicher Distanz nach dem Schweißen oder Löten thermisch mit einer Temperaturregelung nachbehandelt wird.

## Claims

1. Manufacturing device for saw blades (2), in particular saw bands, in particular for welding or soldering individual cutting elements (4) at receiving points (5) on a fed base blade (3), in particular a base band, having a cutting element feed (8) and an electrical pressure welding device (6) with an advanceable welding head (14), **characterized in that** the manufacturing device (1) has an automatic adjusting device (9) which is designed to detect and, if required, adjust or readjust the relative position of base blade (3) and welding head (14) at the process region, wherein the automatic adjusting device (9) has an optical detection device (31, 130) for the position of the base blade (3), in particular of the current receiving point (5) or of the target surface (T), in the process region, which detection device is arranged at a distance from the process region and views the process region transversely with respect to the base blade plane, and wherein the automatic adjusting device (9) has a positioning device (32), which is controlled according to the detection result, for changing the relative position of base blade (3) and welding head (14) as required.

2. Manufacturing device according to Claim 1, **characterized in that** the manufacturing device (1) has a checking device (11) for the welding result, in particular for the saw blade (2) with the welded-on cutting element (4).

3. Manufacturing device according to Claim 1 or 2, **characterized in that** the manufacturing device (1) has an aftertreatment device (12) for the saw blade (2) with the welded-on cutting elements (4).

4. Manufacturing device according to Claim 1, 2 or 3, **characterized in that** the electrical pressure welding device (6) has a shielding gas device (22), in particular on one or both electrodes (18, 19).

5. Manufacturing device according to one of the preceding claims, **characterized in that** the positioning device (32) is connected to the welding head (14) and has one or more positioning axes.

6. Manufacturing device according to Claim 1, **characterized in that** the manufacturing device (1) has a body (34) which is connected to the positioning device (32) and on which are arranged the welding head (14) with a setting device (15), the detection device (31, 130) and the checking device (11), wherein the optical detection device (31, 130) views through a hollow axis of rotation (16) of the setting device (15) of the welding head (14) .

7. Manufacturing device according to Claim 1 or 6, **characterized in that** the optical detection device (31, 130) takes the form of an electronic measuring camera.

8. Manufacturing device according to one of the preceding claims, **characterized in that** the aftertreatment device (12) has a heating device (35), in particular an inductive heating device, for the saw band (2), wherein the aftertreatment device (12), in particular the heating device (35), is controllable and has a sensor, in particular a contactless temperature sensor.

9. Manufacturing device according to one of the preceding claims, **characterized in that** the electrical pressure welding device (6) has a stationary, in particular lower, electrode (19) and an assigned stationary clamping device (23) for the base band (3), wherein the welding head (14) has a movable, in particular upper, electrode (18) and an electrode holder with an advancing device (17).

10. Manufacturing device according to one of the preceding claims, **characterized in that** the welding head (14) has a centring device (20), which is assigned to the electrode (18), for the cutting element (4).

11. Manufacturing device according to one of the preceding claims, **characterized in that** the cutting element feed (8) has a feed device (30) for feeding individual cutting elements (4) to the welding head (14) situated in a retracted position.

12. Method for manufacturing saw blades (2), in particular saw bands, in particular for welding or soldering individually fed cutting elements (4) at receiving points (5) on a fed base blade (3), in particular a base band, by means of an electrical pressure welding device (6) having an advanceable welding head (14), **characterized in that** the relative position of base blade (3) and welding head (14) at the process region is detected and, if required, adjusted or readjusted by means of an automatic adjusting device (9), wherein an optical detection device (31, 130) is used to detect the position of the base blade (3), in particular of the current receiving point (5) or of the target surface (T), in the process region, wherein the optical detection device (31, 130) is arranged at a distance from the process region and views the process region transversely with respect to the base blade plane, and wherein the relative position of base blade (3) and welding head (14) is changed as required by means of a positioning device (32) controlled according to the detection result.

13. Method according to Claim 12, **characterized in that** the cutting elements (4) are each advanced onto an oblique receiving point (3) or target surface (T) of a tooth (112) on the base blade (3) with a working line WL substantially perpendicular thereto and are welded or soldered in particular with shielding gas.

14. Method according to either of Claims 12 and 13, **characterized in that**, to detect the relative position of base blade (3) and welding head (14), the entire receiving point (5) or a characteristic subregion thereof is detected and the position relative to a reference point on the welding head (14) or to a reference specification of the detection device (31) is detected and measured.

15. Method according to one of Claims 12 to 14, **characterized in that** the process result is optically monitored by a checking device (11) and the saw blade (2) with the cutting elements (4) is thermally aftertreated with temperature control with a distance in time and space after the welding or soldering.

## Revendications

1. Module de fabrication de lames de scie (2), en particulier de rubans de scie, en particulier pour le soudage ou le brasage d'éléments de coupe individuels (4) au niveau de points de réception (5) sur une lame de base (3) fournie, en particulier un ruban de base, ledit module de fabrication comprenant une alimentation en éléments de coupe (8) et un dispositif de soudage sous pression électrique (6) pourvu d'une tête de soudage (14) pouvant être approchée, **caractérisé en ce que** le module de fabrication (1) comporte un dispositif d'ajustement automatique (9) qui est conçu pour détecter la position relative de la lame de base (3) et de la tête de soudage (14) dans la zone de traitement et, si nécessaire pour effectuer un réglage ou un réajustement, le dispositif d'ajustement automatique (9) comportant un module de détection optique (31, 130) qui est destiné à la position de la lame de base (3), en particulier au point de réception actuel (5) ou à la surface cible (T), dans la zone de traitement, et qui est disposé à distance de la zone de traitement et regarde la zone de traitement transversalement au plan de la lame de base, et le dispositif d'ajustement automatique (9) comportant un dispositif de positionnement (32) commandé en fonction du résultat de détection pour modifier si nécessaire la position relative de la lame de base (3) et de la tête de soudage (14).

2. Module de fabrication selon la revendication 1, **caractérisé en ce que** le module de fabrication (1) comporte un dispositif de contrôle (11) destiné au résultat du soudage, notamment de la lame de scie (2) à laquelle l'élément de coupe (4) est soudé.

3. Module de fabrication selon la revendication 1 ou 2, **caractérisé en ce que** le module de fabrication (1) comporte un module de post-traitement (12) destiné à la lame de scie (2) à laquelle les éléments de coupe (4) sont soudés.

4. Module de fabrication selon la revendication 1, 2 ou 3, **caractérisé en ce que** le dispositif de soudage sous pression électrique (6) comporte un module de gaz de protection (22), notamment sur une ou deux électrodes (18, 19).

5. Module de fabrication selon l'une des revendications précédentes, **caractérisé en ce que** le dispositif de positionnement (32) est relié à la tête de soudage (14) et comporte un ou plusieurs axes de positionnement.

6. Module de fabrication selon la revendication 1, **caractérisé en ce que** le module de fabrication (1) comporte un corps (34) qui est relié au dispositif de positionnement (32) et sur lequel sont disposés la tête de soudage (14) pourvu d'un module de réglage (15), le module de détection (31, 130) et le module de contrôle (11), le module de détection optique (31, 130) regardant à travers un axe de rotation creux (16) du module de réglage (15) de la tête de soudage (14).

7. Module de fabrication selon la revendication 1 ou 6, **caractérisé en ce que** le module de détection optique (31, 130) est conçu comme une caméra de mesure électronique.

8. Module de fabrication selon l'une des revendications précédentes, **caractérisé en ce que** le module de post-traitement (12) comporte un module de chauffage (35), notamment un module de chauffage par induction, destiné au ruban de scie (2), le module de post-traitement (12), en particulier le module de chauffage (35), pouvant être régulé et comportant un capteur, en particulier un capteur de température sans contact.

9. Module de fabrication selon l'une des revendications précédentes, **caractérisé en ce que** le dispositif de soudage sous pression électrique (6) comporte une électrode (19) fixe, notamment inférieure, et un module de tension fixe (23) associé qui est destiné au ruban de base (3), la tête de soudage (14) comportant une électrode (18) mobile, en particulier supérieure, et un support d'électrode pourvu d'un dispositif d'approche (17).

10. Module de fabrication selon l'une des revendications précédentes, **caractérisé en ce que** la tête de soudage (14) comporte un dispositif de centrage (20) associé à l'électrode (18) et destiné à l'élément de coupe (4).

11. Module de fabrication selon l'une des revendications précédentes, **caractérisé en ce que** l'alimentation en éléments de coupe (8) comporte un dispositif d'alimentation (30) destiné à des éléments de coupe individuels (4) pour la tête de soudage (14) située en position rétractée.

12. Procédé de fabrication de lames de scie (2), en particulier de rubans de scie, en particulier pour souder ou braser des éléments de coupe (4) fournis individuellement au niveau de points de réception (5) sur une lame de base (3) fournie, en particulier un ruban de base, au moyen d'un dispositif de soudage sous pression électrique (6) pourvu d'une tête de soudage (14) pouvant être approchée, **caractérisé en ce que** la position relative de la lame de base (3) et de la tête de soudage (14) dans la zone de traitement est détectée au moyen d'un dispositif d'ajustement automatique (9) et si nécessaire réglée ou réajustée,
la position de la lame de base (3), en particulier le point de réception actuel (5) ou la surface cible (T), dans la zone de traitement étant détectée à l'aide d'un module de détection optique (31, 130),
le module de détection optique (31, 130) étant disposé à distance de la zone de traitement et regardant la zone de traitement transversalement au plan de la lame de base et la position relative de la lame de base (3) et de la tête de soudage (14) étant modifiée si nécessaire à l'aide d'un dispositif de positionnement (32) commandé en fonction du résultat de détection.

13. Procédé selon la revendication 12, **caractérisé en ce que** les éléments de coupe (4) sont chacun approchés d'un point de réception (3) ou d'une surface cible (T) obliques d'une dent (112) sur la lame de base (3) avec une ligne de travail WL sensiblement perpendiculaire à celle-ci et étant notamment soudés ou brasés sous gaz de protection.

14. Procédé selon l'une des revendications 12 à 13, **caractérisé en ce que**, pour détecter la position relative de la lame de base (3) et de la tête de soudage (14), la totalité du point de réception (5) ou une zone partielle caractéristique de celui-ci est détectée et la position par rapport à un point de référence sur la tête de soudage (14) ou à une spécification de référence du module de détection (31) est détectée et mesurée.

15. Procédé selon l'une des revendications 12 à 14, **caractérisé en ce que** le résultat de traitement est contrôlé optiquement à l'aide d'un module de contrôle (11) et la lame de scie (2) pourvue des éléments de coupe (4) est soumise à un post-traitement thermique avec une régulation de température à une distance temporelle et spatiale après le soudage ou le brasage.
